(19) **Europäisches Patentamt / European Patent Office / Office européen des brevets**

(11) **EP 4 340 260 A1**

(12) # EUROPEAN PATENT APPLICATION
published in accordance with Art. 153(4) EPC

(43) Date of publication:
**20.03.2024 Bulletin 2024/12**

(21) Application number: **21944536.8**

(22) Date of filing: **08.06.2021**

(51) International Patent Classification (IPC):
**H04L 1/00** *(2006.01)*

(52) Cooperative Patent Classification (CPC):
**H04L 1/00**

(86) International application number:
**PCT/CN2021/099014**

(87) International publication number:
**WO 2022/257026 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
• **KONG, Lingxiao
Shenzhen, Guangdong 518129 (CN)**
• **PAN, Zhong
Shenzhen, Guangdong 518129 (CN)**
• **ZHONG, Wei
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND COMMUNICATION APPARATUS**

(57) Embodiments of this application provide a communication method and a communication apparatus, which may be applied to a communication system using an FEC technology. In the communication method, a header field of a first data transmission unit sent by a transmit end apparatus may indicate a modulation manner of a second data transmission unit after the first data transmission unit, so that a receive end apparatus can determine, based on the header field of the received first data transmission unit, the modulation manner of the second data transmission unit after the first data transmission unit. Then, before FEC decoding is performed on the second data transmission unit, the receive end apparatus may complete demodulation of the second data transmission unit based on the determined modulation manner. In this way, FEC decoding can be performed on both a header field and a load field of the second data transmission unit. Therefore, the communication method may be applied to the communication system using the FEC technology.

FIG. 6

EP 4 340 260 A1

## Description

## TECHNICAL FIELD

This application relates to the field of communication technologies, and in particular, to a communication method and a communication apparatus.

## BACKGROUND

Pulse amplitude modulation (pulse amplitude modulation, PAM) is a common signal modulation manner in a communication system. A higher order of the PAM indicates a higher transmission rate of the communication system. Based on this, a current high-speed communication system generally modulates data by using PAM4 and a higher modulation order (which may be referred to as high-order PAM).

However, a higher order of the PAM indicates a higher bit error rate of the communication system. Based on a high requirement of the high-speed communication system for robustness and stability (for example, a requirement of an in-vehicle communication system for a bit error rate is generally lower than $1e^{-15}$), in conventional technologies, a technical solution of retransmission is proposed, to be specific, the communication system may retransmit an incorrect data transmission unit, to improve stability of the communication system and reduce a bit error rate of the communication system. However, in the conventional technologies, during retransmission, a retransmitted data transmission unit is also modulated by using high-order PAM. Therefore, the bit error rate of the communication system can be effectively reduced only through a plurality of times of retransmission. However, a delay of the communication system is definitely increased due to the plurality of times of retransmission. Therefore, in the conventional technologies, a technical solution of order reduction retransmission is further proposed, to be specific, the retransmitted data transmission unit is modulated by using low-order PAM.

However, in the solution of order reduction retransmission in the conventional technologies, because a modulation manner of a load field is indicated by a header field, a receive end needs to first demodulate and decode the header field, to obtain the modulation manner of the load field, and then demodulates the load field based on the obtained modulation manner, to decode the load field. In other words, the header field and the load field are separately decoded. However, in a communication system using a forward error correction (forward error correction, FEC) technology, FEC decoding is performed by using a data transmission unit as a unit, to be specific, a header field and a load field need to be decoded together by using FEC. Therefore, the solution of order reduction retransmission in the conventional technologies is not applicable to the communication system using the FEC technology.

## SUMMARY

Embodiments of this application provide a communication method and a communication apparatus, to resolve a problem that a solution in the conventional technologies cannot be applied to a communication system using an FEC technology.

To achieve the foregoing objectives, the following technical solutions are used in embodiments of this application.

According to a first aspect, a communication method is provided. The communication method includes: A transmit end apparatus sends a first data transmission unit, where the first data transmission unit includes a header field, and the header field indicates a modulation manner used by a second data transmission unit after the first data transmission unit. Then, the transmit end apparatus may generate the second data transmission unit based on the modulation manner indicated by the header field of the first data transmission unit, and send the second data transmission unit.

Based on the solution, a header field of a first data transmission unit sent by a transmit end apparatus may indicate a modulation manner of a second data transmission unit after the first data transmission unit, so that a receive end apparatus can determine, based on the header field of the received first data transmission unit, the modulation manner of the second data transmission unit after the first data transmission unit. Further, before FEC decoding is performed on the second data transmission unit, the receive end apparatus may complete demodulation of the second data transmission unit based on the determined modulation manner. In this way, FEC decoding can be performed on both a header field and a load field of the second data transmission unit. Therefore, the communication method may be applied to a communication system using an FEC technology.

In a possible implementation, the first data transmission unit may further include a load field, and the load field includes to-be-transmitted data in the first data transmission unit. The modulation manner of the header field of the first data transmission unit is the same as a modulation manner of the load field of the first data transmission unit. In other words, each data transmission unit is generated by using only one modulation manner. Based on the solution, the communication system switches a modulation manner only at a boundary of a data transmission unit, switches the modulation manner only when the modulation manner of the data transmission unit changes, and does not need to frequently switch the modulation manner of the data transmission unit. In addition, for a multi-path parallel communication system, a length of a data transmission unit may be designed to be an integer multiple of a degree of parallelism. Because each data transmission unit is generated by using only one modulation manner, it can be ensured that modulation manners in each processing periodicity are the same, and processing complexity of the communication system is low. In addition, lengths of data transmission units generated by using a same modulation manner are equal, and when modulation orders used by different data transmission units are different, lengths of the data transmission units also have a proportional relationship. In addition, the receive end apparatus may determine a modulation manner of each data transmission unit in advance. Therefore, after determining a boundary of a data transmission unit, the receive end apparatus may determine a boundary of each subsequent data transmission unit based on the proportional relationship between the lengths of the different data transmission units. In this way, the receive end apparatus does not need to detect a boundary of each data transmission unit, thereby reducing a burden of the communication system.

In a possible implementation, the first data transmission unit is a newly transmitted data transmission unit, and the second data transmission unit is a retransmitted data transmission unit. Before the transmit end apparatus generates the first data transmission unit, the transmit end apparatus may receive a first retransmission request from the receive end apparatus, and determine, based on the first retransmission request, that the second data transmission unit after the first data transmission unit is the retransmitted data transmission unit. The first data transmission unit is generated by the transmit end apparatus by using a first modulation manner, the modulation manner indicated by the header field of the first data transmission unit is a second modulation manner, and a modulation order of the first modulation manner is higher than a modulation order of the second modulation manner. Based on the solution, order reduction retransmission can be implemented. The order reduction retransmission can ensure a data transmission rate of the system, and can also effectively reduce a bit error rate of the system.

In a possible implementation, a bit rate of the first modulation manner may be an integer multiple of a bit rate of the second modulation manner, to be specific, transmission time of a data transmission unit generated by using the second modulation manner is an integer multiple of transmission time of a data transmission unit generated by using the first modulation manner. Based on the solution, it can be ensured that a boundary of a subsequent data transmission unit is not disturbed when a misjudgment occurs in the communication system, to ensure that subsequent data transmission can still be normally performed.

In a possible implementation, the second data transmission unit is an $n^{th}$ data transmission unit after the first data transmission unit, and n is a positive integer. A $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner. The $n^{th}$ data transmission unit (namely, the second data transmission unit) is generated by the transmit end apparatus by using the second modulation manner, and a modulation manner indicated by a header field of the $n^{th}$ data transmission unit is the first modulation manner. Based on the solution, during data retransmission, there are n newly transmitted data transmission units generated by using the first modulation manner before and after a retransmitted data transmission unit generated by using the second modulation manner. In this way, in a transmission process, at least n newly transmitted data transmission units generated by using the first modulation manner are spaced between any two retransmitted data transmission units generated by using the second modulation manner.

In a possible implementation, the first data transmission unit is the newly transmitted data transmission unit, and the header field of the first data transmission unit includes a modulation indication field, where the modulation indication field is transmitted by using a first level or a second level, and the first level and the second level are two levels with highest absolute values in a plurality of levels corresponding to the first modulation manner. Based on the solution, performance of the communication system can be improved.

According to a second aspect, a communication method is provided. The communication method includes: A receive end apparatus receives a first data transmission unit from a transmit end apparatus, where the first data transmission unit includes a header field, and the header field of the first data transmission unit indicates a modulation manner used by a second data transmission unit after the first data transmission unit. Then, the receive end apparatus may receive the second data transmission unit from the transmit end apparatus, and may demodulate the second data transmission unit based on the modulation manner indicated by the header field of the first data transmission unit. Based on the solution, a header field of a first data transmission unit sent by a transmit end apparatus may indicate a modulation manner of a second data transmission unit after the first data transmission unit, so that a receive end apparatus can determine, based on the header field of the received first data transmission unit, the modulation manner of the second data transmission unit after the first data transmission unit. Further, before FEC decoding is performed on the second data transmission unit, the receive end apparatus may complete demodulation of the second data transmission unit based on the determined modulation manner. In this way, FEC decoding can be performed on both a header field and a load field of the second data transmission unit. Therefore, the communication method may be applied to a communication system using an FEC technology.

In a possible implementation, the first data transmission unit may further include a load field, and the load field includes to-be-transmitted data in the first data transmission unit. The modulation manner of the header field of the first data transmission unit is the same as a modulation manner of the load field of the first data transmission unit. In other words, each data transmission unit is generated by using only one modulation manner. Based on the solution, the communication system switches a modulation manner only at a boundary of a data transmission unit, switches the modulation manner only when the modulation manner of the data transmission unit changes, and does not need to frequently switch the modulation manner of the data transmission unit. In addition, for a multi-path parallel communication system, a length of a data transmission unit may be designed to be an integer multiple of a degree of parallelism. Because each data transmission unit is generated by using only one modulation manner, it can be ensured that modulation manners in each processing periodicity are the same, and processing complexity of the communication system is low. In addition, lengths of data transmission units generated by using a same modulation manner are equal, and when modulation orders used by different data transmission units are different, lengths of the data transmission units also have a proportional relationship. In addition, the receive end apparatus may determine a modulation manner of each data transmission unit in advance. Therefore, after determining a boundary of a data transmission unit, the receive end apparatus may determine a boundary of each subsequent data transmission unit based on the proportional relationship between the lengths of the different data transmission units. In this way, the receive end apparatus does not need to detect a boundary of each data transmission unit, thereby reducing a burden of the communication system.

In a possible implementation, the first data transmission unit is a newly transmitted data transmission unit, an $n^{th}$ data transmission unit is a retransmitted data transmission unit, the first data transmission unit is generated by the transmit end apparatus by using a first modulation manner, the modulation manner indicated by the header field of the first data transmission unit is a second modulation manner, and a modulation order of the first modulation manner is higher than a modulation order of the second modulation manner. Before a receive end apparatus receives a first data transmission unit from a transmit end apparatus, the receive end apparatus may further send a first retransmission request to the transmit end apparatus. Based on the solution, order reduction retransmission can be implemented. The order reduction retransmission can ensure a data transmission rate of the system, and can also effectively reduce a bit error rate of the system.

In a possible implementation, that a receive end apparatus receives a first data transmission unit from a transmit end apparatus includes: The receive end apparatus receives the first data transmission unit from the transmit end apparatus in a first time interval, where the first time interval is a time interval in which the receive end apparatus expects to receive the retransmitted data transmission unit after sending the first retransmission request to the transmit end apparatus. After the receive end apparatus processes the first data transmission unit, the receive end apparatus may further check a modulation indication field of the header field of the first data transmission unit, where the modulation indication field of the header field of the first data transmission unit indicates the modulation manner used by the second data transmission unit after the first data transmission unit. That the receive end apparatus demodulates the second data transmission unit based on the modulation manner indicated by the header field of the first data transmission unit includes: The receive end apparatus demodulates, when the check of the receive end apparatus on the modulation indication field of the header field of the first data transmission unit succeeds, the second data transmission unit based on the modulation manner indicated by the modulation indication field of the header field of the first data transmission unit. Based on the solution, the receive end apparatus may receive, in a first time interval, a first data transmission unit that indicates a modulation manner of a retransmitted data transmission unit, to determine the modulation manner of the retransmitted data transmission unit.

Optionally, the receive end apparatus demodulates, when the check of the receive end apparatus on the modulation indication field of the header field of the first data transmission unit fails, the second data transmission unit after the first data transmission unit by using the first modulation manner. Based on the solution, the receive end apparatus may receive, in a first time interval, a first data transmission unit that indicates a modulation manner of a retransmitted data transmission unit, to determine the modulation manner of the retransmitted data transmission unit.

In a possible implementation, a header field of the second data transmission unit may indicate a modulation manner used by a third data transmission unit after the second data transmission unit. The communication method may further include: The receive end apparatus receives the third data transmission unit, and the receive end apparatus demodulates the third data transmission unit based on the first modulation manner. Based on the solution, for the received retransmitted data transmission unit, the modulation manner may be used by default to demodulate the third data transmission unit after the retransmitted data transmission unit, and a second data transmission unit does not need to be checked, thereby reducing a processing burden of the receive end apparatus. In addition, because no check needs to be performed, a problem that robustness of the communication system is reduced due to a possible check error is avoided.

In a possible implementation, the receive end apparatus may receive a fourth data transmission unit in the first time interval, where the fourth data transmission unit is a data transmission unit that is received by the receive end apparatus in the first time interval other than the first data transmission unit and the second data transmission unit, and a modulation indication field of a header field of the fourth data transmission unit indicates a modulation manner used by a fifth data transmission unit after the fourth data transmission unit. The receive end apparatus may check the modulation indication field of the header field of the fourth data transmission unit. The receive end apparatus demodulates, when the check of the receive end apparatus on the modulation indication field of the header field of the fourth data transmission unit succeeds, the fifth data transmission unit based on the modulation manner indicated by the header field of the fourth data transmission unit after receiving the fifth data transmission unit. The receive end apparatus demodulates, when the check of the receive end apparatus on the modulation indication field of the header field of the fourth data transmission unit fails, the fifth data transmission unit by using the first modulation manner after receiving the fifth data transmission unit. Based on the solution, it may be understood that, the receive end apparatus checks all data transmission units received in the first time interval other than the retransmitted data transmission unit.

In a possible implementation, a bit rate of the first modulation manner is an integer multiple of a bit rate of the second modulation manner, to be specific, transmission time of a data transmission unit generated by using the second modulation manner is an integer multiple of transmission time of a data transmission unit generated by using the first modulation manner. Based on the solution, it can be ensured that a boundary of a subsequent data transmission unit is not disturbed when a misjudgment occurs in the communication system, to ensure that subsequent data transmission can still be normally performed.

In a possible implementation, the second data transmission unit is an $n^{th}$ data transmission unit after the first data transmission unit, and n is a positive integer. A $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner. The $n^{th}$ data transmission unit is generated by the transmit end apparatus by using the second modulation manner, and a modulation manner indicated by a header field of the $n^{th}$ data transmission unit is the first modulation manner. Based on the solution, during data retransmission, there are n newly transmitted data transmission units generated by using the first modulation manner before and after a retransmitted data transmission unit generated by using the second modulation manner. In this way, in a transmission process, at least n newly transmitted data transmission units generated by using the first modulation manner are spaced between any two retransmitted data transmission units generated by using the second modulation manner.

In a possible implementation, the receive end apparatus receives a sixth data transmission unit, where the sixth data transmission unit is a data transmission unit received by the receive end apparatus outside the first time interval, and a modulation indication field of a header field of the sixth data transmission unit indicates a modulation manner used by a seventh data transmission unit after the sixth data transmission unit. The receive end apparatus demodulates the seventh data transmission unit by using the first modulation manner after the seventh data transmission unit is received. It may be understood that, the receive end apparatus receives, in the first time interval, the first data transmission unit that indicates the modulation manner used by the retransmitted data transmission unit, and receives the retransmitted data transmission unit. Therefore, the sixth data transmission unit outside the first time interval is a newly transmitted data transmission unit, and the modulation manner indicated by the header field of the sixth data transmission unit is also a modulation manner (namely, the first modulation manner) used by the newly transmitted data transmission unit. In this way, the receive end apparatus may directly demodulate the seventh data transmission unit after the sixth data transmission unit by using the first modulation manner, and does not need to check the modulation indication field of the sixth data transmission unit. Based on the solution, a processing burden of the receive end apparatus can be reduced. In addition, because no check needs to be performed, a problem that robustness of the communication system is reduced due to a possible check error is avoided.

In a possible implementation, the first data transmission unit is the newly transmitted data transmission unit, and the header field of the first data transmission unit includes a modulation indication field, where the modulation indication field is transmitted by using a first level or a second level, and the first level and the second level are two levels with highest absolute values in a plurality of levels corresponding to the first modulation manner.

According to a third aspect, a communication apparatus is provided to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing functions.

According to a fourth aspect, a communication apparatus is provided, including a processor, where the processor is configured to: after being coupled to a memory and reading a computer instruction stored in the memory, perform the method according to any one of the foregoing aspects based on the instructions.

In a possible implementation, the communication apparatus further includes a memory, and the memory is configured to store computer instructions.

In a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, or a related circuit.

In a possible implementation, the communication apparatus may be a chip or a chip system. When the communication apparatus is a chip system, the communication apparatus may include a chip, or may include the chip and another discrete device.

In a possible implementation, when the communication apparatus is a chip or a chip system, the communication interface may be an input/output interface, an interface circuit, an output circuit, an input circuit, a pin, a related circuit, or the like on the chip or the chip system. The processor may also be embodied as a processing circuit or a logic circuit.

According to a fifth aspect, a computer-readable storage medium is provided. The computer-readable storage medium stores instructions, and when the instructions are run on a computer, the computer is enabled to perform the method in any one of the foregoing aspects.

According to a sixth aspect, a computer program product including instructions is provided. When the computer program product runs on a computer, the computer is enabled to perform the method in any one of the foregoing aspects.

For technical effects brought by any possible implementation of the third aspect to the sixth aspect, refer to technical effects brought by different implementations of the first aspect or the second aspect. Details are not described herein again.

According to a seventh aspect, a communication system is provided. The communication system includes a transmit end apparatus that performs the communication method according to the first aspect and a receive end apparatus that performs the communication method according to the second aspect.

**BRIEF DESCRIPTION OF DRAWINGS**

FIG. 1 is a curve diagram of signal-to-noise ratios-bit error rates corresponding to PAM of different modulation orders according to an embodiment of this application;
FIG. 2 is a schematic diagram of a structure of a data transmission unit according to an embodiment of this application;
FIG. 3 is a schematic diagram of a communication system using an FEC technology according to an embodiment of this application;
FIG. 4 is a schematic diagram of a communication system according to an embodiment of this application;
FIG. 5 is a schematic diagram of a structure of a communication apparatus according to an embodiment of this application;
FIG. 6 is a flowchart of a communication method according to an embodiment of this application;
FIG. 7 is a schematic diagram of a structure of a data transmission unit according to an embodiment of this application;
FIG. 8 is a schematic diagram of a plurality of consecutive data transmission units generated by a transmit end apparatus according to an embodiment of this application;
FIG. 9 is a schematic diagram of a plurality of consecutive data transmission units generated by a transmit end apparatus according to an embodiment of this application;
FIG. 10 is a schematic diagram of processing a plurality of consecutive data transmission units by a receive end apparatus according to an embodiment of this application;
FIG. 11 is a schematic diagram of processing a plurality of consecutive data transmission units by a receive end apparatus according to an embodiment of this application;
FIG. 12 is a flowchart of another communication method according to an embodiment of this application; and
FIG. 13 is a schematic diagram of a structure of another communication apparatus according to an embodiment of this application.

**DESCRIPTION OF EMBODIMENTS**

For ease of understanding the technical solutions in embodiments of this application, the following briefly describes or defines technologies related to this application.

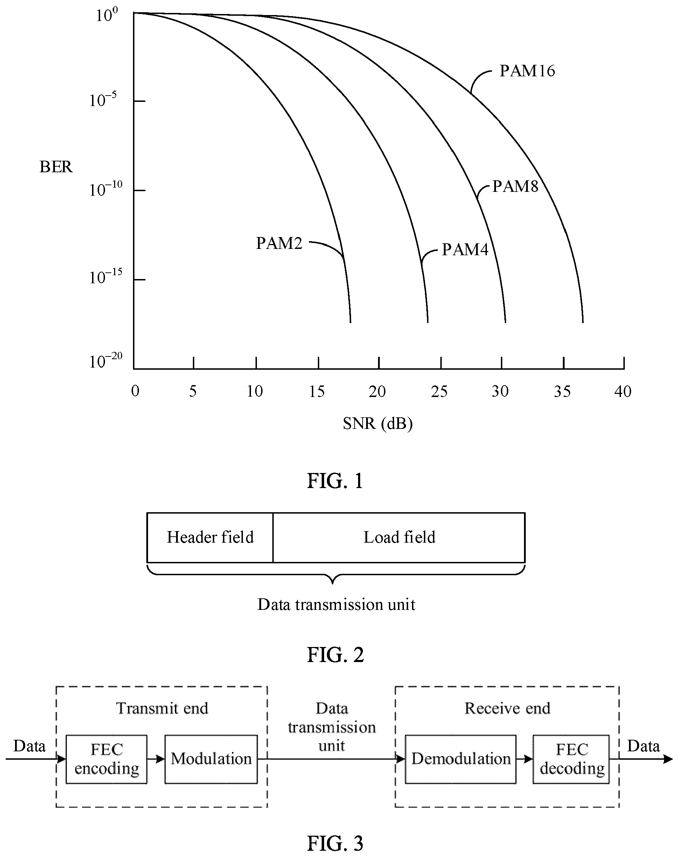

In the conventional technologies, data may be transmitted in a signal manner. PAM is a signal modulation manner, and data may be modulated into a signal used to transmit data, so that a communication system transmits the data by using the modulated signal. The PAM may include a plurality of modulation orders, for example, PAM2, PAM4, PAM8, and PAM16. A lower modulation order of the PAM indicates higher stability and stronger anti-noise and anti-interference capabilities of the communication system. A higher modulation order of the PAM indicates a higher transmission rate of the communication system. For example, at a same symbol (symbol) rate, a bit rate of PAM4 modulation is twice a bit rate of PAM2 modulation (Bit rate=Symbol rate*$\log_2 m$, where m is a modulation order). Therefore, a transmission rate of a signal obtained through the PAM4 modulation is twice a transmission rate of a signal obtained through the PAM2 modulation. However, if data is modulated by using PAM4 and a higher modulation order, stability of the communication system is poor, and a bit error rate is high. FIG. 1 is signal-to-noise ratio (signal-to-noise ratio, SNR)-bit error rate curve diagrams corresponding to PAM of different modulation orders. It can be learned from FIG. 1 that, in a same SNR, a lower modulation order indicates a lower bit error rate.

It should be noted that, in this embodiment of this application, all the following data transmission units are signals that are used to transmit data and that are modulated by using the PAM. Therefore, the data transmission unit in this embodiment of this application may also be referred to as a PAM signal. Certainly, the data transmission unit in this embodiment of this application may also be referred to as a code block. This is uniformly described herein. A name of the data transmission unit is not specifically limited in this embodiment of this application.

Currently, due to a requirement for high-rate transmission, an in-vehicle communication system generally modulates data by using PAM4 and a higher modulation order (which may be referred to as high-order PAM). However, the in-vehicle communication system also has a high requirement for robustness and stability. For example, a requirement of the in-vehicle communication system for a bit error rate is generally lower than $1e^{-15}$. Based on this, in the conventional technologies, a technical solution of retransmission is proposed, to be specific, the communication system may retransmit an incorrect data transmission unit, to improve stability of the communication system and reduce a bit error rate of the communication system. For example, in ITU-T G.998.4 that is a standard formulated by an International telecommunication union (International Telecommunication Union, ITU) for telecommunication standardization sector (ITU for Telecommunication Standardization Sector, ITU-T) and that is used to improve noise protection of a digital subscriber line transceiver, a retransmission technology is used. However, in the conventional technologies, during retransmission, a retransmitted data transmission unit is also modulated by using high-order PAM. Therefore, the bit error rate of the communication system can be effectively reduced only through a plurality of times of retransmission. However, a delay of the communication system is definitely increased due to the plurality of times of retransmission.

Experimental results show that, if the retransmitted data transmission unit is modulated by using low-order PAM, the bit error rate of the communication system can be effectively reduced through one retransmission. For example, before an in-vehicle communication system using PAM4 uses the retransmission technology, a bit error rate of the in-vehicle communication system may reach $1e^{-5}$. After two times of retransmission with the modulation order unchanged, the bit error rate of the in-vehicle communication system may reach $1e^{-15}$. However, when the modulation order is reduced to PAM2, the bit error rate of the in-vehicle communication system after one retransmission is far lower than $1e^{-15}$. Therefore,

high-order modulation is used during normal transmission, and low-order modulation is used during retransmission, so that the bit error rate of the communication system can be effectively reduced and the stability of the communication system can be improved without affecting a bandwidth of the communication system, and a delay of the communication system can be further reduced by reducing a quantity of times of retransmission.

Therefore, in the conventional technologies, a technical solution of order reduction retransmission is further proposed, to be specific, the retransmitted data transmission unit is modulated by using low-order PAM. For example, FIG. 2 is a schematic diagram of a structure of a data transmission unit. The data transmission unit includes a header field and a load field. In a vehicle long distance serializer/deserializer (SerDes) physical layer (physical layer, PHY) interface specification: MIPI a-phy released by a mobile industry processor interface (Mobile Industry Processor Interface, MIPI) alliance, it is specified that a modulation manner of a load field of a data transmission unit is indicated by a header field of the data transmission unit. In addition, by default, a header field of each data transmission unit is modulated by using low-order PAM (for example, PAM2), a load field of a newly transmitted data transmission unit is modulated by using high-order PAM (for example, PAM4), and a load field of a retransmitted data transmission unit is modulated by using low-order PAM (for example, PAM2).

In the solution, the load field of the newly transmitted data transmission unit is modulated by using the high-order PAM, so that a communication system has a high transmission rate; and the load field of the retransmitted data transmission unit is modulated by using the low-order PAM, so that a bit error rate of the communication system can be effectively reduced, and stability of the communication system can be improved. In addition, a small quantity of times of retransmission also reduces a delay of the communication system.

An FEC technology is a detection and error correction technology, can provide an encoding gain for data transmission, and is an effective method for improving robustness of a communication system. In a communication system using the FEC technology, a sequence of processing a data transmission unit by a receive end is as follows: first demodulating the data transmission unit, and then performing FEC decoding, to obtain data of the data transmission unit. For example, FIG. 3 is a schematic diagram of a communication system using an FEC technology. As shown in FIG. 3, a transmit end needs to first perform FEC encoding on to-be-transmitted data, then perform modulation, and then send a modulated data transmission unit to a receive end. For the received data transmission unit, the receive end needs to first perform demodulation, and then perform FEC decoding to obtain the data in the data transmission unit.

However, in the solution of order reduction retransmission in the conventional technologies, because a modulation manner of a load field is indicated by a header field, a receive end needs to first demodulate and decode the header field, to obtain the modulation manner of the load field, and then demodulates the load field based on the obtained modulation manner, to decode the load field. In other words, the header field and the load field are separately decoded. However, in the communication system using the FEC technology, FEC decoding needs to be performed on an entire data transmission unit obtained through FEC encoding, to obtain an FEC gain. In other words, FEC decoding is performed by using a data transmission unit as a unit. Therefore, the solution of order reduction retransmission in the conventional technologies cannot be used in the communication system using the FEC technology.

In addition, in the solution of order reduction retransmission in the conventional technologies, because a header field of each data transmission unit uses a low-order modulation manner, and a load field may use a high-order or low-order modulation manner, a length of a data transmission unit using a high modulation order and a length of a data transmission unit using a low modulation order do not have a proportional relationship. In this way, the communication system cannot determine a boundary of a data transmission unit in advance. Therefore, a receive end needs to detect a boundary of each data transmission unit, resulting in a heavy burden of the communication system. In addition, if the receive end misjudges a modulation manner of a load part of a data transmission unit, boundaries of subsequent data transmission units may be continuously misjudged. In addition, modulation manners included in one data transmission unit may be different, and a modulation manner of a load field of one data transmission unit may also be different from that of a header field of a next data transmission unit. In this way, the communication system needs to frequently switch a modulation manner. Further, for a multi-path parallel communication system, modulation manners may be switched on different channels in a parallel periodicity. Therefore, processing complexity of the communication system is high. In addition, a transmission rate of the entire communication system is also reduced because all header fields use a low-order modulation manner.

To resolve the foregoing problems, an embodiment of this application provides a communication method, which can implement order reduction retransmission, can also be applied to a communication system using FEC, and can also reduce processing complexity of the communication system without affecting a transmission rate of the communication system.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of' means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

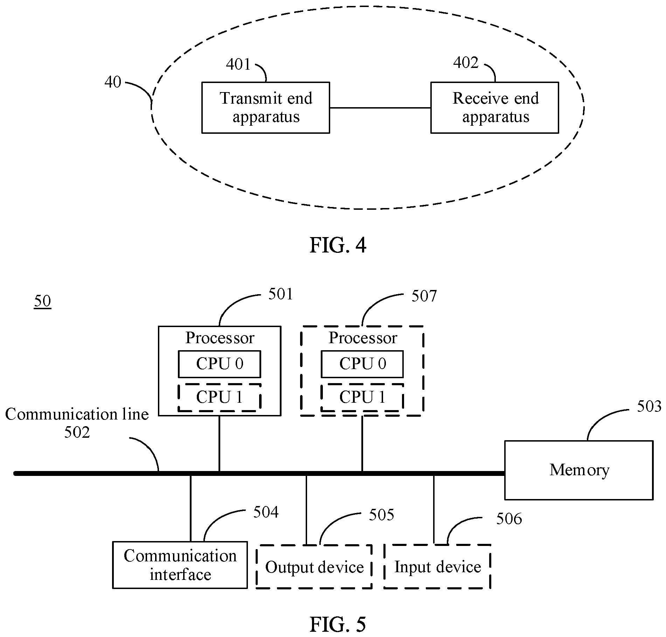

First, a communication system to which the communication method provided in this embodiment of this application is applied is briefly described. FIG. 4 is a schematic diagram of a communication system 40 according to an embodiment of this application. As shown in FIG. 4, the communication system 40 includes a transmit end apparatus 401 and a receive end apparatus 402. The transmit end apparatus 401 establishes a communication connection with the receive end apparatus 402, and communication may be performed by using the communication method provided in this embodiment of this application.

It should be noted that, an application scenario described in embodiments of this application is intended to describe the technical solutions in embodiments of this application more clearly, and does not constitute limitations to the technical solutions in embodiments of this application. For example, the communication system provided in this embodiment of this application may include a plurality of transmit end apparatuses and a plurality of receive end apparatuses. Each transmit end apparatus establishes a communication connection with at least one receive end apparatus, and each receive end apparatus also establishes a communication connection with at least one transmit end apparatus. In an implementation, a transmit end apparatus may also be used as a receive end apparatus, and a receive end apparatus may also be used as a transmit end apparatus. This is not limited in this embodiment of this application.

Optionally, the transmit end apparatus or the receive end apparatus in this embodiment of this application may also be referred to as a communication apparatus, and may be a general-purpose device or a dedicated device. This is not specifically limited in this embodiment of this application.

Optionally, a related function of the transmit end apparatus or the receive end apparatus in this embodiment of this application may be implemented by one device, or may be jointly implemented by a plurality of devices, or may be implemented by one or more functional modules in one device. This is not specifically limited in this embodiment of this application. It may be understood that, the foregoing function may be a network element in a hardware device, may be a software function running on dedicated hardware, a combination of hardware and software, or a virtualization function instantiated on a platform (for example, a cloud platform).

For example, the related function of the transmit end apparatus and the receive end apparatus in this application may be implemented by using a communication apparatus 50 in FIG. 5. FIG. 5 is a schematic diagram of a structure of a communication apparatus 50 according to an embodiment of this application. The communication apparatus 50 includes one or more processors 501, a communication line 502, and at least one communication interface (FIG. 5 uses only an example in which a communication interface 504 and one processor 501 are included for description). Optionally, the communication apparatus may further include a memory 503.

The processor 501 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 502 may include a channel, and is configured to connect different components.

The communication interface 504 may be a transceiver module configured to communicate with another device or a communication network such as an Ethernet, a RAN, or a wireless local area network (wireless local area network, WLAN). For example, the transceiver module may be an apparatus such as a transceiver or a transceiver machine. Optionally, the communication interface 504 may alternatively be a transceiver circuit located inside the processor 501, and is configured to implement signal input and signal output of the processor.

The memory 503 may be an apparatus having a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer. This is not limited thereto. The memory may exist independently, and connect to the processor through the communication line 502. The memory may alternatively be integrated with the processor.

The memory 503 is configured to store computer-executable instructions for performing the solutions in this application, and the processor 501 controls execution. The processor 501 is configured to execute the computer-executable instructions stored in the memory 503, to implement the communication method provided in this embodiment of this application.

Alternatively, optionally, in this embodiment of this application, the processor 501 may perform processing related functions in a communication method provided in the following embodiments in this application, and the communication interface 504 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the processor 501 may include one or more CPUs, for example, a CPU 0 and a CPU 1 in FIG. 5.

During specific implementation, in an embodiment, the communication apparatus 50 may include a plurality of processors, for example, the processor 501 and a processor 507 in FIG. 5. Each of the processors may be a single-core (single-core) processor or a multi-core (multi-core) processor. The processor herein may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions.

During specific implementation, in an embodiment, the communication apparatus 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive user input in a plurality of manners. For example, the input device 506 may be a mouse, a keyboard, a touchscreen device, or a sensor device.

The communication apparatus 50 may also be referred to as a communication device sometimes, and may be a general-purpose device or a dedicated device. For example, the communication apparatus 50 may be a desktop computer, a portable computer, a network server, a personal digital assistant (personal digital assistant, PDA), a mobile phone, a tablet computer, a wireless terminal device, an embedded device, the foregoing terminal, the foregoing network device, or a device having a structure similar to a structure shown in FIG. 5. A type of the communication apparatus 50 is not limited in this embodiment of this application.

In addition, a composition structure shown in FIG. 5 does not constitute a limitation on the communication apparatus. In addition to the components shown in FIG. 5, the communication apparatus may include more or fewer components than those shown in the figure, or some components may be combined, or different component arrangements may be used.

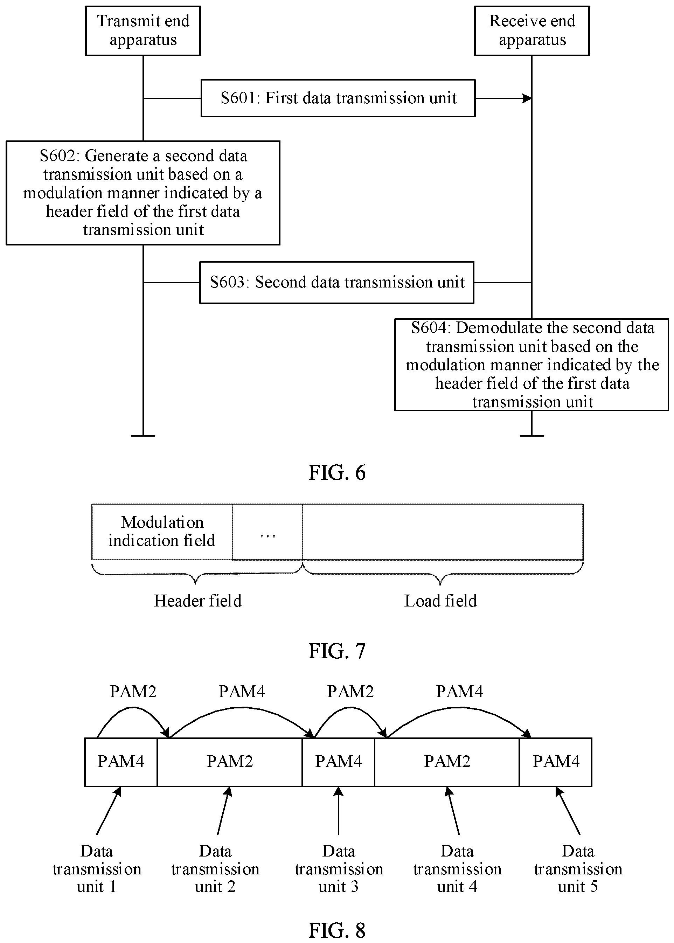

FIG. 6 is a flowchart of a communication method according to an embodiment of this application. As shown in FIG. 6, the communication method may include the following steps.

S601: A transmit end apparatus sends a first data transmission unit, and correspondingly, a receive end apparatus receives the first data transmission unit.

The first data transmission unit may include a header field, and the header field indicates a modulation manner used by a second data transmission unit after the first data transmission unit.

In an implementation, as shown in FIG. 7, the header field of the first data transmission unit may include a modulation indication field, and the first data transmission unit may indicate, by using a value of the modulation indication field, the modulation manner used by the second data transmission unit after the first data transmission unit. For example, the modulation indication field may include one bit, a modulation manner indicated by a value 0 of the modulation indication field is PAM2, and a modulation manner indicated by a value 1 of the modulation indication field is PAM4. Certainly, the modulation indication field may alternatively include more bits, to indicate more modulation manners. This is not specifically limited in this embodiment of this application.

It should be noted that, the second data transmission unit may include one data transmission unit, or may include a plurality of data transmission units. This is not limited in this embodiment of this application.

S602: The transmit end apparatus generates the second data transmission unit based on the modulation manner indicated by the header field of the first data transmission unit.

It should be noted that, that the transmit end apparatus generates a data transmission unit includes: modulating to-be-transmitted data, and then encoding modulated data, to obtain the data transmission unit. In this embodiment of this application, this is uniformly described herein, and details are not described below.

When generating the second data transmission unit, the transmit end apparatus may modulate data by using the modulation manner indicated by the header field of the first data transmission unit.

S603: The transmit end apparatus sends the second data transmission unit, and correspondingly, the receive end apparatus receives the second data transmission unit.

S604: The receive end apparatus demodulates the second data transmission unit based on the modulation manner indicated by the header field of the first data transmission unit.

It should be understood that, before receiving the second data transmission unit, the receive end apparatus may complete processing on the first data transmission unit, to obtain the modulation manner indicated by the header field of the first data transmission unit. In this way, the receive end apparatus may demodulate the second data transmission unit based on the modulation manner indicated by the header field of the first data transmission unit.

It should be noted that, that the receive end apparatus processes a data transmission unit includes: demodulating the data transmission unit, and then decoding a demodulated data transmission unit, to obtain data of the data transmission unit. In this embodiment of this application, this is uniformly described herein, and details are not described below.

It should be further noted that, when processing the first data transmission unit, the receive end apparatus also needs to demodulate the first data transmission unit. In a possible implementation, before receiving the first data transmission unit, the receive end apparatus may determine a modulation manner of the first data transmission unit, to demodulate the first data transmission unit based on the determined modulation manner. For example, the modulation manner of the first data transmission unit may be indicated by a data transmission unit before the first data transmission unit. After processing the data transmission unit before the first data transmission unit, the receive end apparatus may obtain the modulation manner indicated by the data transmission unit, and then demodulate the first data transmission unit based on the indicated modulation manner.

Alternatively, in another possible implementation, in this embodiment of this application, the receive end apparatus may demodulate the first data transmission unit based on a pre-configured modulation manner. It should be understood that, in this implementation, the first data transmission unit is alternatively generated by the transmit end apparatus based on the pre-configured modulation manner. For example, when a communication system does not perform data retransmission, a newly transmitted data transmission unit is definitely transmitted, and the receive end apparatus may demodulate the first data transmission unit based on a pre-configured modulation manner of the newly transmitted data transmission unit. For example, for a communication system that modulates a newly transmitted data transmission unit by using PAM4, modulation manners pre-configured by the transmit end apparatus and the receive end apparatus may be PAM4.

In conclusion, this embodiment of this application provides a communication method. A header field of a first data transmission unit sent by a transmit end apparatus may indicate a modulation manner of a second data transmission unit after the first data transmission unit, so that a receive end apparatus can determine, based on the header field of the received first data transmission unit, the modulation manner of the second data transmission unit after the first data transmission unit. Further, before FEC decoding is performed on the second data transmission unit, the receive end apparatus may complete demodulation of the second data transmission unit based on the determined modulation manner. In this way, FEC decoding can be performed on both a header field and a load field of the second data transmission unit. Therefore, the communication method may be applied to a communication system using an FEC technology.

It should be noted that, the communication method provided in this embodiment of this application is not only applicable to the communication system including FEC, but also applicable to a communication system not including FEC. This is not limited in this embodiment of this application.

Optionally, the first data transmission unit may further include a load field, and the load field includes to-be-transmitted data in the first data transmission unit. The modulation manner of the header field of the first data transmission unit may be the same as a modulation manner of the load field of the first data transmission unit. In other words, each data transmission unit is generated by using only one modulation manner.

In this case, the communication system switches a modulation manner only at a boundary of a data transmission unit, switches the modulation manner only when the modulation manner of the data transmission unit changes, and does not need to frequently switch the modulation manner of the data transmission unit. In addition, for a multi-path parallel communication system, a length of a data transmission unit may be designed to be an integer multiple of a degree of parallelism. Because each data transmission unit is generated by using only one modulation manner, it can be ensured that modulation manners in each processing periodicity are the same, and processing complexity of the communication system is low. In addition, lengths of data transmission units generated by using a same modulation manner are equal, and when modulation orders used by different data transmission units are different, lengths of the data transmission units also have a proportional relationship. In addition, the receive end apparatus may determine a modulation manner of each data transmission unit in advance. Therefore, after determining a boundary of a data transmission unit, the receive end apparatus may determine a boundary of each subsequent data transmission unit based on the proportional relationship between the lengths of the different data transmission units. In this way, the receive end apparatus does not need to detect a boundary of each data transmission unit, thereby reducing a burden of the communication system.

Optionally, for example, the header field of the first data transmission unit may include the modulation indication field, where the modulation indication field indicates the modulation manner used by the second data transmission unit after the first data transmission unit. In the communication method provided in this application, after receiving and processing the first data transmission unit, the receive end apparatus may separately check the modulation indication field of the header field of the first data transmission unit. When the check of the receive end apparatus on the modulation indication field succeeds, after subsequently receiving the second data transmission unit, the receive end apparatus demodulates the second data transmission unit based on the modulation manner indicated by the modulation indication field. However, when the check of the receive end apparatus on the modulation indication field fails, after subsequently receiving the second data transmission unit, the receive end apparatus demodulates the second data transmission unit by using a first modulation manner by default, where the first modulation manner is a modulation manner used by a newly transmitted data transmission unit.

In the communication method provided in this embodiment of this application, the first data transmission unit indicates the modulation manner of the second data transmission unit after the first data transmission unit, and the receive end apparatus separately checks the modulation indication field that is in the header field of the first data transmission unit and that indicates the modulation manner, which can ensure data processing reliability, thereby avoiding a problem that the receive end apparatus subsequently demodulates the second data transmission unit by using an incorrect modulation manner due to a data transmission error in the modulation indication field in a process of transmitting the first data transmission unit. When the check fails, the receive end apparatus demodulates the second data transmission unit by using the first modulation manner by default, which can ensure that the receive end apparatus does not misjudge the first modulation manner as a second modulation manner, where the second modulation manner is a modulation manner used by a retransmitted data transmission unit. Certainly, based on the solution, the second modulation manner may be misjudged as the first modulation manner. However, because a proportion of retransmitted data transmission units in a communication process is very small, the communication method can ensure a low overall misjudgment rate of the communication system.

Optionally, a bit rate of the first modulation manner may be an integer multiple of a bit rate of the second modulation manner, to be specific, transmission time of a data transmission unit generated by using the second modulation manner is an integer multiple of transmission time of a data transmission unit generated by using the first modulation manner.

Bit rate=Symbol rate*$\log_2 m$, where m is a modulation order, and symbol rates of a same communication system are the same. For example, the first modulation manner may be PAM4, and the second modulation manner may be PAM2. At a same symbol rate, a bit rate of PAM4 modulation is twice a bit rate of PAM2 modulation. In this way, transmission time of a data transmission unit using the PAM2 modulation is twice transmission time of a data transmission unit using the PAM4 modulation, in other words, transmission time of a retransmitted data transmission unit is twice transmission time of a newly transmitted data transmission unit. In this embodiment of this application, when a check on a modulation indication field of a data transmission unit fails, PAM4 is used by default to process an $n^{th}$ data transmission unit that is indicated by the data transmission unit and that is after the data transmission unit. In this way, when a misjudgment occurs in a modulation indication field that indicates a retransmitted data transmission unit, the retransmitted data transmission unit is processed based on PAM4. Because the transmission time of the retransmitted data transmission unit is twice the transmission time of the newly transmitted data transmission unit, the retransmitted data transmission unit is processed based on two newly transmitted data transmission units, and a boundary of a data transmission unit is not disturbed. In this way, based on the solution, a boundary of a subsequent data transmission unit is not disturbed even if a misjudgment occurs in the communication system, so that subsequent data transmission can still be normally performed.

Optionally, the first data transmission unit may be a newly transmitted data transmission unit, and the second data transmission unit may be a retransmitted data transmission unit. In other words, a newly transmitted data transmission unit may indicate a modulation manner of a subsequently retransmitted data transmission unit. In this case, before performing step S601, the receive end apparatus may send a first retransmission request to the transmit end apparatus. Correspondingly, the transmit end apparatus may receive the first retransmission request from the receive end apparatus, and determine, based on the first retransmission request, that the second data transmission unit after the first data transmission unit is the retransmitted data transmission unit. Further, the transmit end apparatus generates the first data transmission unit, and sets the modulation manner indicated by the header field of the first data transmission unit to the second modulation manner. The first data transmission unit is generated by the transmit end apparatus by using the first modulation manner, and a modulation order of the first modulation manner is higher than a modulation order of the second modulation manner.

Based on the solution provided in this embodiment of this application, when a communication system needs to retransmit data, a low-order modulation manner may be used for a retransmitted data transmission unit, so that order reduction retransmission can be implemented. The order reduction retransmission can ensure a data transmission rate of the communication system, and can also effectively reduce a bit error rate of the communication system. For example, the transmit end apparatus may generate a newly transmitted data transmission unit by using PAM4, and generate a retransmitted data transmission unit by using PAM2. In addition, by setting the newly transmitted data transmission unit to indicate a modulation manner used by the retransmitted data transmission unit, the solution of order reduction retransmission is also applicable to the communication system using FEC.

Optionally, for example, the first data transmission unit is the newly transmitted data transmission unit, the second data transmission unit is the retransmitted data transmission unit, and the header field of the first data transmission unit includes the modulation indication field that indicates the modulation manner used by the second data transmission unit. The communication method provided in this embodiment of this application may further include: The receive end apparatus may receive the first data transmission unit in a first time interval, where the first time interval is a time interval in which the receive end apparatus expects to receive the retransmitted data transmission unit after sending the first retransmission request to the transmit end apparatus. In addition, after receiving and processing the first data transmission unit, the receive end apparatus may check the modulation indication field of the header field of the first data transmission unit. When the check of the receive end apparatus on the modulation indication field succeeds, the receive end apparatus demodulates the second data transmission unit after the first data transmission unit based on the modulation manner indicated by the modulation indication field. When the check of the receive end apparatus on the modulation indication field fails, the receive end apparatus determines to demodulate the second data transmission unit after the first data transmission unit by using the first modulation manner.

In other words, in this embodiment of this application, after sending the first retransmission request, the receive end apparatus may determine the first time interval based on a processing delay of the communication system, where the first time interval is the time interval in which the receive end apparatus expects to receive the retransmitted data transmission unit. In addition, the first data transmission unit that indicates the modulation manner used by the retransmitted data transmission unit is also received in the first time interval, so that the receive end apparatus can determine the modulation manner used by the retransmitted data transmission unit.

Optionally, for example, the first data transmission unit is the newly transmitted data transmission unit, and the second data transmission unit is the retransmitted data transmission unit. In the communication method provided in this embodiment of this application, a header field of the second data transmission unit may indicate a modulation manner used by a third data transmission unit after the second data transmission unit. The receive end apparatus demodulates the third data transmission unit by using the first modulation manner after receiving the third data transmission unit.

In this embodiment of this application, the retransmitted data transmission unit only indicates a modulation manner used by the newly transmitted data transmission unit. Therefore, when receiving a data transmission unit whose modulation manner is indicated by the retransmitted data transmission unit, the receive end apparatus demodulates the data transmission unit by using the first modulation manner by default. In other words, the receive end apparatus does not need to check a modulation indication field of the retransmitted data transmission unit. Based on the solution, a processing burden of the receive end apparatus can be reduced. In addition, because no check needs to be performed, a problem that robustness of the communication system is reduced due to a possible check error is avoided.

Optionally, in the communication method provided in this embodiment of this application, the receive end apparatus further receives a fourth data transmission unit in the first time interval, where the fourth data transmission unit is a data transmission unit that is received by the receive end apparatus in the first time interval other than the first data transmission unit and the second data transmission unit, and a modulation indication field of a header field of the fourth data transmission unit may indicate a modulation manner used by a fifth data transmission unit after the fourth data transmission unit. The receive end apparatus may check the modulation indication field of the header field of the fourth data transmission unit. When the check of the receive end apparatus on the modulation indication field of the header field of the fourth data transmission unit succeeds, after subsequently receiving the fifth data transmission unit, the receive end apparatus demodulates the fifth data transmission unit by using the modulation manner indicated by the modulation indication field of the header field of the fourth data transmission unit. When the check of the receive end apparatus on the modulation indication field of the header field of the fourth data transmission unit fails, after subsequently receiving the fifth data transmission unit, the receive end apparatus demodulates the fifth data transmission unit by using the first modulation manner. With reference to the solution in the foregoing embodiment, it may be understood that, the receive end apparatus checks all other data transmission units received in the first time interval than the retransmitted data transmission unit.

Optionally, in the communication method provided in this embodiment of this application, the receive end apparatus may further receive a sixth data transmission unit, where the sixth data transmission unit is a data transmission unit received by the receive end apparatus outside the first time interval, and a modulation indication field of a header field of the sixth data transmission unit may indicate a modulation manner used by a seventh data transmission unit after the sixth data transmission unit. After receiving the seventh data transmission unit, the receive end apparatus demodulates the seventh data transmission unit by using the first modulation manner.

In other words, when the communication system does not perform data retransmission, a newly transmitted data transmission unit should be transmitted. When data retransmission needs to be performed, the receive end apparatus determines the first time interval, receives, in the first time interval, the first data transmission unit that indicates the modulation manner used by the retransmitted data transmission unit, and receives the retransmitted data transmission unit. Therefore, the sixth data transmission unit received by the receive end apparatus outside the first time interval is a newly transmitted data transmission unit, and the modulation manner indicated by the header field of the sixth data transmission unit is also a modulation manner (namely, the first modulation manner) used by the newly transmitted data transmission unit. In this way, the receive end apparatus may directly demodulate the seventh data transmission unit after the sixth data transmission unit by using the first modulation manner, and does not need to check the modulation indication field of the sixth data transmission unit. Based on the solution, a processing burden of the receive end apparatus can be reduced. In addition, because no check needs to be performed, a problem that robustness of the communication system is reduced due to a possible check error is avoided.

Optionally, for example, the second data transmission unit is an $n^{th}$ data transmission unit after the first data transmission unit. When the first data transmission unit is the newly transmitted data transmission unit and the second data transmission unit is the retransmitted data transmission unit, a $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner. The second data transmission unit is generated by the transmit end apparatus by using the second modulation manner, and a modulation manner indicated by a header field of the second data transmission unit is the first modulation manner.

It can be learned based on the foregoing solution that, when data retransmission needs to be performed, the first data transmission unit may indicate the modulation manner of the retransmitted data transmission unit, and retransmitted data is scheduled at the $n^{th}$ data transmission unit after the first data transmission unit, so that the second data transmission unit is generated by the transmit end apparatus by using the second modulation manner. That the modulation manners indicated by the header fields of the $1^{st}$ data transmission unit to the $n^{th}$ data transmission unit after the first data transmission unit are all the first modulation manner indicates that a $1^{st}$ data transmission unit to an $n^{th}$ data transmission unit after the retransmitted data transmission unit are also generated by the transmit end apparatus by using the first modulation manner. Based on the solution, during data retransmission, there are n newly transmitted data transmission units generated by using the first modulation manner before and after a retransmitted data transmission unit generated by using the second modulation manner. In this way, in a transmission process, at least n newly transmitted data transmission units generated by using the first modulation manner are spaced between any two retransmitted data transmission units generated by using the second modulation manner. The following provides specific descriptions by using several examples.

For example, it is assumed that n=1, in other words, a previous data transmission unit indicates a modulation manner of a $1^{st}$ data transmission unit after the previous data transmission unit. FIG. 8 is a schematic diagram of a plurality of data transmission units generated by a transmit end apparatus. As shown in FIG. 8, it is assumed that a data transmission unit 1 is a newly transmitted data transmission unit generated by using PAM4, and the data transmission unit 1 indicates that a modulation manner of a $1^{st}$ data transmission unit (a data transmission unit 2) after the data transmission unit 1 is PAM2, so that the data transmission unit 2 is a retransmitted data transmission unit generated by using PAM2. According to the communication method provided in this embodiment of this application, a modulation manner indicated by the data transmission unit 2 should be PAM4, so that a data transmission unit 3 is a newly transmitted data transmission unit generated by using PAM4. It can be learned that, there is one newly transmitted data transmission unit generated by using PAM4 before and after the data transmission unit 2. Still refer to FIG. 8. It is assumed that the data transmission unit 3 indicates that a modulation manner of a $1^{st}$ data transmission unit (a data transmission unit 4) after the data transmission unit 3 is PAM2. In this case, similarly, the data transmission unit 4 is a retransmitted data transmission unit generated by using PAM2, and a data transmission unit 5 is a newly transmitted data transmission unit generated by using PAM4. This is not described herein again. It can be learned that, there is also one newly transmitted data transmission unit generated by using PAM4 before and after the data transmission unit 4.

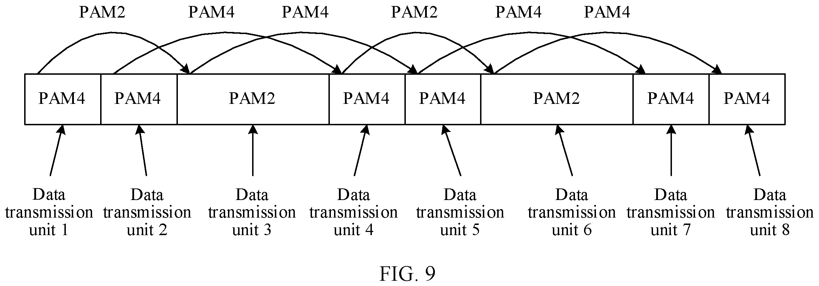

Alternatively, for example, it is assumed that n=2, in other words, a previous data transmission unit indicates a modulation manner of a $2^{nd}$ data transmission unit after the previous data transmission unit. FIG. 9 is a schematic diagram of a plurality of data transmission units generated by a transmit end apparatus. As shown in FIG. 9, it is assumed that a data transmission unit 1 is a newly transmitted data transmission unit generated by using PAM4, and the data transmission unit 1 indicates that a modulation manner of a $2^{nd}$ data transmission unit (a data transmission unit 3) after the data transmission unit 1 is PAM2, so that the data transmission unit 3 is a retransmitted data transmission unit generated by using PAM2. According to the communication method provided in this embodiment of this application, a $1^{st}$ data transmission unit (a data transmission unit 2) after the data transmission unit 1 should be a newly transmitted data transmission unit generated by using PAM4, and a modulation manner indicated by the data transmission unit 2 is also PAM4, so that a $2^{nd}$ data transmission unit (a data transmission unit 4) after the data transmission unit 2 is a newly transmitted data transmission unit generated by using PAM4. It can be learned that, there are two newly transmitted data transmission units generated by using PAM4 before and after the data transmission unit 3. Still refer to FIG. 9. It is assumed that the data transmission unit 4 indicates that a modulation manner of a $2^{nd}$ data transmission unit (a data transmission unit 6) after the data transmission unit 4 is PAM2. In this case, similarly, the data transmission unit 6 is a retransmitted data transmission unit generated by using PAM2, and a data transmission unit 5, a data transmission unit 7, and a data transmission unit 8 are newly transmitted data transmission units generated by using PAM4. This is not described herein again. It can be learned that, there are also two newly transmitted data transmission units generated by using PAM4 before and after the data transmission unit 6.

It should be understood that, in this embodiment of this application, transmission time of a retransmitted data transmission unit may be an integer multiple of that of a newly transmitted data transmission unit, and when a check on a modulation indication field of a data transmission unit fails, the receive end apparatus demodulates a data transmission unit indicated by the modulation indication field by using the first modulation manner by default. In this way, it is assumed that a check of the receive end apparatus on the modulation indication field of the first data transmission unit that indicates a retransmitted data transmission unit fails. In this case, the retransmitted data transmission unit is considered as a plurality of newly transmitted data transmission units and demodulated by using the first modulation manner. Certainly, after the retransmitted data transmission unit is demodulated, the check definitely fails, and a 1st data transmission unit to an $n^{th}$ data transmission unit after the retransmitted data transmission unit are demodulated by using the first modulation manner by default. However, based on the foregoing solution, at least n newly transmitted data transmission units are spaced between retransmitted data transmission units. Therefore, no error occurs when the 1 st data transmission unit to the $n^{th}$ data transmission unit after the data transmission unit are demodulated by using the first modulation manner. It can be learned that, even if a check on a modulation indication field of a retransmitted data transmission unit fails, a subsequent data transmission unit can still be correctly demodulated, so that a check on a modulation indication field of the subsequent data transmission unit succeeds. Therefore, the solution of this application can prevent continuous propagation of an error.

For example, it is assumed that the first modulation manner is PAM4, and the second modulation manner is PAM2. If the receive end apparatus does not correctly obtain the second modulation manner PAM2 indicated by the first data transmission unit, the receive end apparatus demodulates the $n^{th}$ data transmission unit (a retransmitted data transmission unit) based on PAM4. A length of a data transmission unit generated by using PAM2 is twice that of a data transmission unit generated by using PAM4. Therefore, the receive end apparatus demodulates, based on PAM4 indicated by the first data transmission unit, a first half of a retransmitted data transmission unit generated by using PAM2; and demodulates, based on PAM4 indicated by a 1st data transmission unit after the first data transmission unit, a second half of the retransmitted data transmission unit generated by using PAM2.

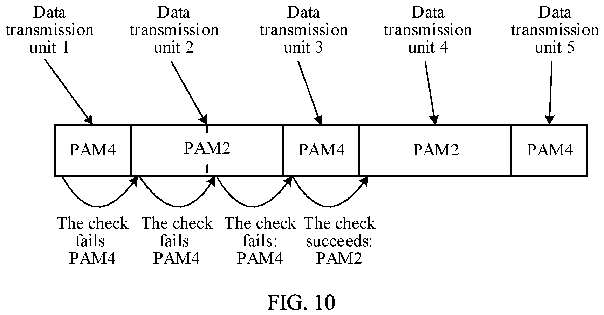

FIG. 10 is a schematic diagram of processing, by a receive end apparatus, the plurality of data transmission units shown in FIG. 8. As shown in FIG. 10, it is assumed that a check fails when the receive end apparatus processes the data transmission unit 1, and an indicated modulation manner PAM2 is not obtained, the receive end apparatus demodulates a first half of the data transmission unit 2 by using PAM4 by default. However, after the receive end apparatus demodulates the first half of the data transmission unit 2 by using PAM4, the check also fails, and the receive end apparatus demodulates a second half of the data transmission unit 2 by using PAM4 by default. However, after the receive end apparatus demodulates the second half of the data transmission unit 2 by using PAM4, the check also fails, and the receive end apparatus demodulates the data transmission unit 3 by using PAM4 by default. After the receive end apparatus demodulates the data transmission unit 3 by using PAM4, the check succeeds. In this case, error propagation ends.

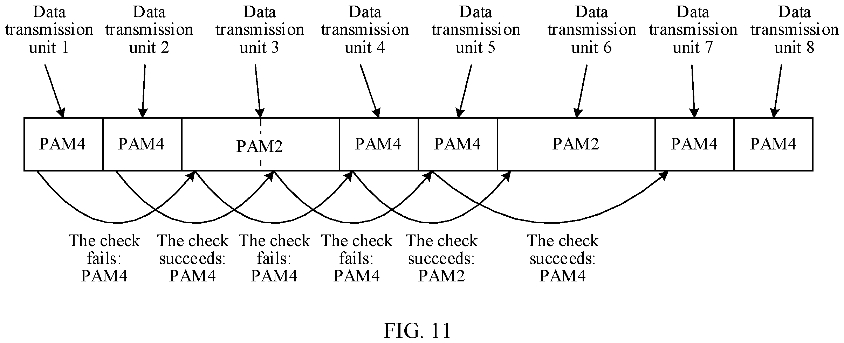

FIG. 11 is a schematic diagram of processing, by a receive end apparatus, the plurality of data transmission units shown in FIG. 9. As shown in FIG. 11, it is assumed that a check fails when the receive end apparatus processes the data transmission unit 1, and an indicated modulation manner PAM2 is not obtained, the receive end apparatus demodulates a first half of the data transmission unit 3 by using PAM4 by default. After processing the data transmission unit 2, the receive end apparatus determines a modulation manner PAM4, so that the receive end apparatus demodulates a second half of the data transmission unit 3 by using PAM4. After the receive end apparatus demodulates the first half of the data transmission unit 3 by using PAM4, the check fails, and the receive end apparatus demodulates the data transmission unit 4 by using PAM4 by default. After the receive end apparatus demodulates the second half of the data transmission unit 3 by using PAM4, the check also fails, and the receive end apparatus demodulates the data transmission unit 5 by using PAM4 by default. When the receive end apparatus demodulates the data transmission unit 4 and the data transmission unit 5 by using PAM4, the check succeeds. In this case, error propagation ends.

Because the check is automatically terminated when the check fails, the solution can greatly improve reliability of the communication system. Certainly, in the communication method, a retransmitted data transmission unit can be transmitted only after n newly transmitted data transmission units are spaced. Therefore, scheduling of the retransmitted data transmission unit is delayed by transmission time of the n newly transmitted data transmission units. However, a value of n may be negatively correlated with a processing rate of the communication system. For a high-speed communication system, the value of n may be very small, so that a scheduling delay caused by the communication method is also very small. For example, an ultra-high-speed system with a transmission rate of 10 gigabits/second (gigabits/second, Gb/s) is used as an example. It is assumed that n=2, and a size of a data transmission unit generated by using PAM4 is 1000 bits (bit). In this case, the scheduling delay caused based on the foregoing solution is only 0.2 microseconds ($\mu$s).

It should be understood that, although order reduction retransmission may also be implemented in the conventional technologies, all header fields that indicate modulation manners of load parts in the conventional technologies use a low-order modulation manner by default. In this way, a header field of a newly transmitted data transmission unit is also generated by using a low-order modulation manner (for example, PAM2). As a result, an overall transmission rate of a communication system is reduced, and performance of the communication system is reduced. However, in this embodiment of this application, a newly transmitted data transmission unit is entirely generated by using a high-order modulation manner (for example, PAM4), and certainly, a field that indicates a modulation manner is also generated by using the high-order modulation manner. Therefore, a problem that the transmission rate of the entire communication system is reduced and the performance of the communication system is reduced because all the header fields of the conventional technologies use the low-order modulation manner can be avoided.

Optionally, in this embodiment of this application, there are at most two modulation manners that need to be indicated. Therefore, when a newly transmitted data transmission unit through high-order PAM modulation is transmitted, fields that indicate the modulation manners may be transmitted by using two levels with highest absolute values in a plurality of levels corresponding to the high-order PAM modulation. For example, in a typical power normalization system, four levels corresponding to a data transmission unit through PAM4 modulation are +12, +4, -4, and -12, and two levels corresponding to a data transmission unit through PAM2 modulation are +9 and -9. For example, a header field of the data transmission unit includes a modulation indication field, and the modulation indication field indicates a modulation manner. It is assumed that the newly transmitted data transmission unit is generated by the transmit end apparatus by using PAM4. In this case, the transmit end apparatus may transmit data of a modulation indication field of a header field by using the level +12 or -12. Compared with a manner in which the data of the modulation indication field of the header field is transmitted by using the two levels +9 or -9 corresponding to the data transmission unit through the PAM2 modulation, in the method, performance of the communication system is improved by

$$20 log 10(\frac{12}{9}) = 2.5$$
decibels (decibel, dB).

It should be noted that, when the second data transmission unit in this embodiment of this application is the $n^{th}$ data transmission unit after the first data transmission unit, the value of n may be set in a plurality of implementations. In a possible implementation, the value of n may be pre-configured on the transmit end apparatus and the receive end apparatus. In another possible implementation, the value of n may alternatively be indicated by using a field of a data transmission unit. This is not limited in this embodiment of this application.

It should be noted that, the value of n may be negatively correlated with the processing rate of the communication system. For a communication system with a high processing rate, the value of n may be set to be smaller. Certainly, the value of n may alternatively be manually set without considering the processing rate of the communication system. This is not limited in this embodiment of this application.

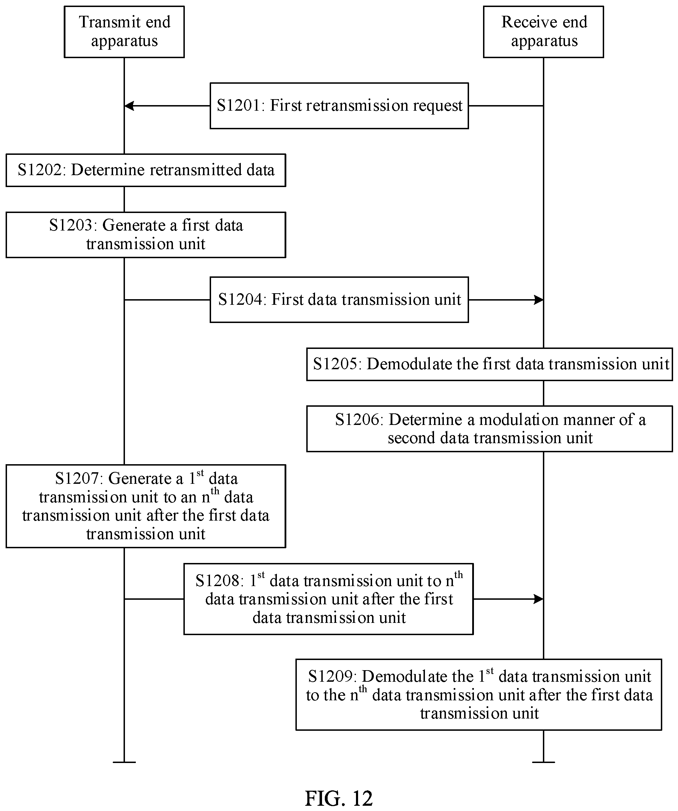

In an implementation, an example in which the second data transmission unit is the $n^{th}$ data transmission unit after the first data transmission unit, the first data transmission unit is the newly transmitted data transmission unit, and the second data transmission unit is the retransmitted data transmission unit is used to describe the communication method provided in this embodiment of this application. As shown in FIG. 12, a communication method may include the following steps.

S1201: A receive end apparatus sends a first retransmission request to a transmit end apparatus, and correspondingly, the transmit end apparatus receives the first retransmission request from the receive end apparatus.

In a data transmission process, the receive end apparatus may determine, based on a status (correct or incorrect) of received data, whether retransmission needs to be performed. When determining that the data needs to be retransmitted, the receive end apparatus sends the first retransmission request to the transmit end apparatus.

In addition, after sending the first retransmission request, the receive end apparatus may determine a first time interval based on a processing delay of the communication system. For related descriptions of the first time interval, refer to the foregoing method embodiment. Details are not described herein again.

S1202: The transmit end apparatus determines retransmitted data.

The transmit end apparatus may determine, based on the received first retransmission request, data that needs to be retransmitted, and may determine time for scheduling the retransmitted data. For example, the transmit end apparatus may determine to schedule the retransmitted data at an $n^{th}$ data transmission unit after a first data transmission unit. In other words, the transmit end apparatus may determine that a second data transmission unit after the first data transmission unit is a retransmitted data transmission unit corresponding to the data that needs to be retransmitted.

S1203: The transmit end apparatus generates the first data transmission unit.

The first data transmission unit is generated by the transmit end apparatus by using a first modulation manner, and a modulation manner indicated by a header field of the first data transmission unit is a second modulation manner. A modulation order of the first modulation manner is higher than a modulation order of the second modulation manner, and a length of a data transmission unit generated by using the second modulation manner is an integer multiple of a length of a data transmission unit generated by using the first modulation manner.

For example, the first data transmission unit is generated by the transmit end apparatus by using PAM4, and the modulation manner indicated by the header field of the first data transmission unit is PAM2.

S1204: The transmit end apparatus sends the first data transmission unit to the receive end apparatus, and correspondingly, the receive end apparatus receives the first data transmission unit from the transmit end apparatus.

It should be noted that, in this embodiment, the first data transmission unit is received by the receive end apparatus in the first time interval.

S1205: The receive end apparatus demodulates the first data transmission unit.

The first data transmission unit is a newly transmitted data transmission unit, and therefore should be demodulated by the receive end apparatus by using the first modulation manner. For that the receive end apparatus determines the modulation manner of the first data transmission unit, refer to related descriptions in step S604.

S1206: The receive end apparatus determines a modulation manner of a second data transmission unit.

After decoding the first data transmission unit, the receive end apparatus may obtain data of the header field of the first data transmission unit. In addition, the receive end apparatus checks a modulation indication field of the header field of the first data transmission unit. When the check succeeds, the receive end apparatus may determine to demodulate the second data transmission unit after the first data transmission unit by using the second modulation manner. When the check fails, the receive end apparatus may determine to demodulate the second data transmission unit after the first data transmission unit by using the first modulation manner.

For example, it is assumed that a modulation manner indicated by a value 0 of the modulation indication field is PAM4, and a modulation manner indicated by a value 1 of the modulation indication field is PAM2. After processing the first data transmission unit in step S1205, the receive end apparatus obtains a value of the modulation indication field is 1. When the check of the receive end apparatus succeeds, the receive end apparatus may determine to demodulate the second data transmission unit by using PAM2.

S1207: The transmit end apparatus generates a $1^{st}$ data transmission unit to an $n^{th}$ data transmission unit after the first data transmission unit.

In a possible implementation, the $1^{st}$ data transmission unit to an $(n-1)^{th}$ data transmission unit after the first data transmission unit are newly transmitted data transmission units, and the $1^{st}$ data transmission unit to the $(n-1)^{th}$ data transmission unit are generated by the transmit end apparatus by using the first modulation manner. The $n^{th}$ data transmission unit (namely, the second data transmission unit) is a retransmitted data transmission unit, and the $n^{th}$ data transmission unit is generated by the transmit end apparatus by using the second modulation manner. In addition, all modulation manners indicated by header fields of the $1^{st}$ data transmission unit to the $n^{th}$ data transmission unit are the first modulation manner.

S1208: The transmit end apparatus sends, to the receive end apparatus, the $1^{st}$ data transmission unit to the $n^{th}$ data transmission unit after the first data transmission unit, and correspondingly, the receive end apparatus receives the $1^{st}$ data transmission unit to the $n^{th}$ data transmission unit after the first data transmission unit.

S1209: The receive end apparatus demodulates the $1^{st}$ data transmission unit to the $n^{th}$ data transmission unit after the first data transmission unit.

It is assumed that the check of the receive end apparatus on the modulation indication field of the header field of the first data transmission unit succeeds, the first modulation manner is PAM4, and the second modulation manner is PAM2. In this case, the receive end apparatus demodulates the $1^{st}$ data transmission unit to the $(n-1)^{th}$ data transmission unit based on PAM4, and demodulates the $n^{th}$ data transmission unit based on PAM2.

It should be noted that, according to the solution in the foregoing embodiment, the $1^{st}$ data transmission unit to the $n^{th}$ data transmission unit after the first data transmission unit are also received in the first time interval. For the $1^{st}$ data transmission unit to the $(n-1)^{th}$ data transmission unit after the first data transmission unit, after receiving and processing each data transmission unit, the receive end apparatus checks a modulation indication field of a header field of each data transmission unit, to determine a modulation manner of the $n^{th}$ data transmission unit after the first data transmission unit. For the $n^{th}$ data transmission unit after the first data transmission unit, because the $n^{th}$ data transmission unit is a retransmitted data transmission unit, the receive end apparatus does not check the modulation indication field of the header field of the $n^{th}$ data transmission unit, but demodulates the $n^{th}$ data transmission unit after the first data transmission unit by using PAM4 by default. This is uniformly described herein, and details are not described below again.

It should be noted that, in the foregoing method embodiment, actions of the transmit end apparatus may be performed by the processor 501 in the communication apparatus 50 shown in FIG. 5 by invoking the application program code stored in the memory 503, to instruct the transmit end apparatus to perform execution, and actions of the receive end apparatus may be performed by the processor 501 in the communication apparatus 50 shown in FIG. 5 by invoking the application program code stored in the memory 503, to instruct the receive end apparatus to perform execution. This is not limited in this embodiment.

It may be understood that, in the embodiments shown in FIG. 6 and FIG. 12, the methods and/or the steps implemented by the transmit end apparatus may also be implemented by a component (for example, a chip or a circuit) that may be used in the transmit end apparatus, and the methods and/or the steps implemented by the receive end apparatus may also be implemented by a component (for example, a chip or a circuit) that may be used in the receive end apparatus.

The foregoing mainly describes the solutions provided in embodiments of this application from a perspective of interaction between the transmit end apparatus and the receive end apparatus. Correspondingly, an embodiment of this application further provides a communication apparatus. The communication apparatus may be the transmit end apparatus or the receive end apparatus in the foregoing method embodiments, or a device including the transmit end apparatus or the receive end apparatus, or a component that can be used in the transmit end apparatus or the receive end apparatus. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

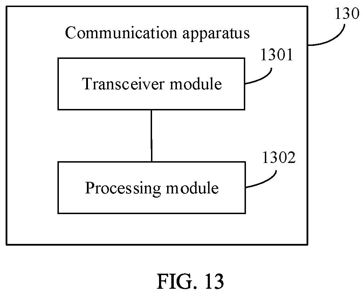

FIG. 13 is a schematic diagram of a structure of a communication apparatus 130. The communication apparatus 130 includes a transceiver module 1301 and a processing module 1302. The transceiver module 1301 may also be referred to as a transceiver unit, and is configured to implement a transceiver function. For example, the transceiver module may be a transceiver circuit, a transceiver machine, a transceiver, or a communication interface.

An example in which the communication apparatus 130 is the transmit end apparatus in the foregoing method embodiments is used.

The transceiver module 1301 is configured to send a first data transmission unit, where the first data transmission unit includes a header field, and the header field indicates a modulation manner used by a second data transmission unit after the first data transmission unit; the processing module 1302 is configured to generate the second data transmission unit based on the modulation manner indicated by the header field of the first data transmission unit; and the transceiver module 1301 is further configured to send the first data transmission unit to a receive end apparatus.

Optionally, the transceiver module 1301 is further configured to receive a first retransmission request from the receive end apparatus; and the processing module 1302 is configured to generate the first data transmission unit based on the first retransmission request, where the first data transmission unit is generated by the transmit end apparatus by using a first modulation manner, the modulation manner indicated by the header field of the first data transmission unit is a second modulation manner, and a modulation order of the first modulation manner is higher than a modulation order of the second modulation manner.

An example in which the communication apparatus 130 is the receive end apparatus in the foregoing method embodiments is used.

The transceiver module 1301 is configured to receive a first data transmission unit from a transmit end apparatus, where the first data transmission unit includes a header field, and the header field indicates a modulation manner used by a second data transmission unit after the first data transmission unit; the transceiver module 1301 is further configured to receive the second data transmission unit; and the processing module 1302 is configured to demodulate the second data transmission unit based on the modulation manner of the header field of the first data transmission unit.

Optionally, the first data transmission unit is a newly transmitted data transmission unit, the second data transmission unit is a retransmitted data transmission unit, the first data transmission unit is generated by a transmit end apparatus by using a first modulation manner, the modulation manner indicated by the header field of the first data transmission unit is a second modulation manner, and a modulation order of the first modulation manner is higher than a modulation order of the second modulation manner. The processing module 1302 is further configured to send a first retransmission request to the transmit end apparatus.

Optionally, that the transceiver module 1301 is configured to receive a first data transmission unit from a transmit end apparatus includes: receiving the first data transmission unit from the transmit end apparatus in a first time interval, where the first time interval is a time interval in which the receive end apparatus expects to receive the retransmitted data transmission unit after sending the first retransmission request to the transmit end apparatus. The processing module 1302 is further configured to check a modulation indication field of the header field of the first data transmission unit, where the modulation indication field of the header field of the first data transmission unit indicates the modulation manner used by the second data transmission unit after the first data transmission unit. The processing module 1302 is further configured to determine, when the check of the receive end apparatus on the modulation indication field of the header field of the first data transmission unit succeeds, to demodulate the second data transmission unit based on the modulation manner indicated by the modulation indication field of the header field of the first data transmission unit.

Optionally, the processing module 1302 is further configured to demodulate, when the check of the receive end apparatus on the modulation indication field of the header field of the first data transmission unit fails, the second data transmission unit by using the first modulation manner.

Optionally, a header field of the second data transmission unit indicates a modulation manner used by a third data transmission unit after the second data transmission unit. The transceiver module 1301 is further configured to receive a third data transmission unit; and the processing module 1302 is further configured to demodulate the third data transmission unit based on the first modulation manner.

Optionally, the transceiver module 1301 is further configured to receive a fourth data transmission unit in the first time interval, where the fourth data transmission unit is a data transmission unit that is received by the receive end apparatus in the first time interval other than the first data transmission unit and the second data transmission unit, and a modulation indication field of a header field of the fourth data transmission unit indicates a modulation manner used by a fifth data transmission unit after the fourth data transmission unit; the processing module 1302 is further configured to check the modulation indication field of the header field of the fourth data transmission unit; and the processing module 1302 is further configured to demodulate, when the check of the receive end apparatus on the modulation indication field of the header field of the fourth data transmission unit succeeds, the fifth data transmission unit by using the modulation manner indicated by the modulation indication field of the header field of the fourth data transmission unit; or the processing module 1302 is further configured to demodulate, when the check of the receive end apparatus on the modulation indication field of the header field of the fourth data transmission unit fails, the fifth data transmission unit by using the first modulation manner.

Optionally, the transceiver module 1301 is further configured to receive a sixth data transmission unit, where the sixth data transmission unit is a data transmission unit received by the receive end apparatus outside the first time interval, and a header field included in the sixth data transmission unit indicates a modulation manner used by a seventh data transmission unit after the sixth data transmission unit; and the processing module 1302 is further configured to demodulate the seventh data transmission unit by using the first modulation manner.

All related content of the steps in the foregoing method embodiments may be cited in function descriptions of the corresponding functional modules. Details are not described herein again.

In this embodiment, the communication apparatus 130 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 130 may be in a form of the communication apparatus 50 shown in FIG. 5.

For example, the processor 501 in the communication apparatus 50 shown in FIG. 5 may invoke the computer-executable instructions stored in the memory 503, to enable the communication apparatus 50 to perform the communication method in the foregoing method embodiments.

Specifically, functions/implementation processes of the transceiver module 1301 and the processing module 1302 in FIG. 13 may be implemented by the processor 501 in the communication apparatus 50 shown in FIG. 5 by invoking the computer-executable instructions stored in the memory 503. Alternatively, a function/implementation process of the processing module 1302 in FIG. 13 may be implemented by the processor 501 in the communication apparatus 50 shown in FIG. 5 by invoking the computer-executable instructions stored in the memory 503, and a function/implementation process of the transceiver module 1301 in FIG. 13 may be implemented by the communication interface 504 in the communication apparatus 50 shown in FIG. 5.

The communication apparatus 130 provided in this embodiment can perform the foregoing communication method. Therefore, for technical effects that can be achieved by the communication apparatus 130, refer to the foregoing method embodiments. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, devices, and methods may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-state Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   sending, by a transmit end apparatus, a first data transmission unit, wherein the first data transmission unit comprises a header field, and the header field indicates a modulation manner used by a second data transmission unit after the first data transmission unit;
   generating, by the transmit end apparatus, the second data transmission unit based on the modulation manner indicated by the header field of the first data transmission unit; and
   sending, by the transmit end apparatus, the second data transmission unit.

2. The method according to claim 1, wherein the first data transmission unit further comprises a load field, the load field comprises to-be-transmitted data in the first data transmission unit, and the modulation manner of the header field of the first data transmission unit is the same as a modulation manner of the load field of the first data transmission unit.

3. The method according to claim 2, wherein the first data transmission unit is a newly transmitted data transmission unit, and the second data transmission unit is a retransmitted data transmission unit; and before the sending, by a transmit end apparatus, a first data transmission unit, the method further comprises:

   receiving, by the transmit end apparatus, a first retransmission request; and
   generating, by the transmit end apparatus, the first data transmission unit based on the first retransmission request, wherein
the first data transmission unit is generated by the transmit end apparatus by using a first modulation manner, the modulation manner indicated by the header field of the first data transmission unit is a second modulation manner, and a modulation order of the first modulation manner is higher than a modulation order of the second modulation manner.

4. The method according to claim 3, wherein a bit rate of the first modulation manner is an integer multiple of a bit rate of the second modulation manner.

5. The method according to claim 4, wherein the second data transmission unit is an $n^{th}$ data transmission unit after the first data transmission unit, and n is a positive integer, wherein a $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner; and the second data transmission unit is generated by the transmit end apparatus by using the second modulation manner, and a modulation manner indicated by a header field of the second data transmission unit is the first modulation manner.

6. The method according to any one of claims 1 to 5, wherein the first data transmission unit is the newly transmitted data transmission unit, and the header field of the first data transmission unit comprises a modulation indication field, wherein the modulation indication field is transmitted by using a first level or a second level, and the first level and the second level are two levels with highest absolute values in a plurality of levels corresponding to the first modulation manner.

7. A communication method, wherein the method comprises:

receiving, by a receive end apparatus, a first data transmission unit, wherein the first data transmission unit comprises a header field, and the header field indicates a modulation manner used by a second data transmission unit after the first data transmission unit;
receiving, by the receive end apparatus, the second data transmission unit; and
demodulating, by the receive end apparatus, the second data transmission unit based on the modulation manner indicated by the header field of the first data transmission unit.

8. The method according to claim 7, wherein the first data transmission unit further comprises a load field, the load field comprises to-be-transmitted data in the first data transmission unit, and the modulation manner of the header field of the first data transmission unit is the same as a modulation manner of the load field of the first data transmission unit.

9. The method according to claim 8, wherein the first data transmission unit is a newly transmitted data transmission unit, the second data transmission unit is a retransmitted data transmission unit, the first data transmission unit is generated by a transmit end apparatus by using a first modulation manner, the modulation manner indicated by the header field of the first data transmission unit is a second modulation manner, and a modulation order of the first modulation manner is higher than a modulation order of the second modulation manner; and before the receiving, by a receive end apparatus, a first data transmission unit, the method further comprises:
sending, by the receive end apparatus, a first retransmission request.

10. The method according to claim 9, wherein the receiving, by a receive end apparatus, a first data transmission unit comprises:

receiving, by the receive end apparatus, the first data transmission unit in a first time interval, wherein the first time interval is a time interval in which the receive end apparatus expects to receive the retransmitted data transmission unit after sending the first retransmission request to the transmit end apparatus;
after the receiving, by a receive end apparatus, a first data transmission unit, the method further comprises:

checking, by the receive end apparatus, a modulation indication field of the header field of the first data transmission unit, wherein the modulation indication field of the header field of the first data transmission unit indicates the modulation manner used by the second data transmission unit; and the demodulating, by the receive end apparatus, the second data transmission unit based on the modulation manner indicated by the header field of the first data transmission unit comprises:
demodulating, by the receive end apparatus when the check of the receive end apparatus on the modulation indication field of the header field of the first data transmission unit succeeds, the second data transmission unit based on the modulation manner indicated by the modulation indication field of the header field of the first data transmission unit.

**11.** The method according to claim 10, wherein the method further comprises:
demodulating, by the receive end apparatus when the check of the receive end apparatus on the modulation indication field of the header field of the first data transmission unit fails, the second data transmission unit by using the first modulation manner.

**12.** The method according to claim 10 or 11, wherein a header field of the second data transmission unit indicates a modulation manner used by a third data transmission unit after the second data transmission unit; and the method further comprises:

receiving, by the receive end apparatus, the third data transmission unit; and
demodulating, by the receive end apparatus, the third data transmission unit based on the first modulation manner.

**13.** The method according to any one of claims 10 to 12, wherein the method further comprises:

receiving, by the receive end apparatus, a fourth data transmission unit in the first time interval, wherein the fourth data transmission unit is a data transmission unit that is received by the receive end apparatus in the first time interval other than the first data transmission unit and the second data transmission unit, and a modulation indication field of a header field of the fourth data transmission unit indicates a modulation manner used by a fifth data transmission unit after the fourth data transmission unit;
checking, by the receive end apparatus, the modulation indication field of the header field of the fourth data transmission unit; and
demodulating, by the receive end apparatus when the check of the receive end apparatus on the modulation indication field of the header field of the fourth data transmission unit succeeds, the fifth data transmission unit based on the modulation manner indicated by the header field of the fourth data transmission unit after receiving the fifth data transmission unit; or
demodulating, by the receive end apparatus when the check of the receive end apparatus on the modulation indication field of the header field of the fourth data transmission unit fails, the fifth data transmission unit by using the first modulation manner after receiving the fifth data transmission unit.

**14.** The method according to any one of claims 10 to 13, wherein a bit rate of the first modulation manner is an integer multiple of a bit rate of the second modulation manner.

**15.** The method according to claim 14, wherein the second data transmission unit is an $n^{th}$ data transmission unit after the first data transmission unit, and n is a positive integer, wherein a $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner; and the $n^{th}$ data transmission unit is generated by the transmit end apparatus by using the second modulation manner, and a modulation manner indicated by a header field of the $n^{th}$ data transmission unit is the first modulation manner.

**16.** The method according to any one of claims 10 to 15, wherein the method further comprises:

receiving, by the receive end apparatus, a sixth data transmission unit, wherein the sixth data transmission unit is a data transmission unit received by the receive end apparatus outside the first time interval, and a modulation indication field of a header field of the sixth data transmission unit indicates a modulation manner used by a seventh data transmission unit after the sixth data transmission unit; and
demodulating, by the receive end apparatus, the seventh data transmission unit by using the first modulation manner.

**17.** The method according to any one of claims 7 to 16, wherein the first data transmission unit is the newly transmitted data transmission unit, and the header field of the first data transmission unit comprises a modulation indication field, wherein the modulation indication field is transmitted by using a first level or a second level, and the first level and the second level are two levels with highest absolute values in a plurality of levels corresponding to the first modulation manner.

**18.** A transmit end apparatus, wherein the transmit end apparatus comprises a processing module and a transceiver module, wherein

the transceiver module is configured to send a first data transmission unit, wherein the first data transmission unit comprises a header field, and the header field indicates a modulation manner used by a second data transmission unit after the first data transmission unit;
the processing module is configured to generate the second data transmission unit based on the modulation manner indicated by the header field of the first data transmission unit; and
the transceiver module is further configured to send the second data transmission unit.

19. The transmit end apparatus according to claim 18, wherein the first data transmission unit further comprises a load field, the load field comprises to-be-transmitted data in the first data transmission unit, and the modulation manner of the header field of the first data transmission unit is the same as a modulation manner of the load field of the first data transmission unit.

20. The transmit end apparatus according to claim 19, wherein the first data transmission unit is a newly transmitted data transmission unit, and the second data transmission unit is a retransmitted data transmission unit;

the transceiver module is further configured to receive a first retransmission request; and
the processing module is configured to generate the first data transmission unit based on the first retransmission request, wherein
the first data transmission unit is generated by the transmit end apparatus by using a first modulation manner, the modulation manner indicated by the header field of the first data transmission unit is a second modulation manner, and a modulation order of the first modulation manner is higher than a modulation order of the second modulation manner.

21. The transmit end apparatus according to claim 20, wherein a bit rate of the first modulation manner is an integer multiple of a bit rate of the second modulation manner.

22. The transmit end apparatus according to claim 21, wherein the second data transmission unit is an $n^{th}$ data transmission unit after the first data transmission unit, and n is a positive integer, wherein a $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner; and the second data transmission unit is generated by the transmit end apparatus by using the second modulation manner, and a modulation manner indicated by a header field of the second data transmission unit is the first modulation manner.

23. The transmit end apparatus according to any one of claims 18 to 22, wherein the first data transmission unit is the newly transmitted data transmission unit, and the header field of the first data transmission unit comprises a modulation indication field, wherein the modulation indication field is transmitted by using a first level or a second level, and the first level and the second level are two levels with highest absolute values in a plurality of levels corresponding to the first modulation manner.

24. A receive end apparatus, wherein the receive end apparatus comprises a processing module and a transceiver module, wherein

the transceiver module is configured to receive a first data transmission unit, wherein the first data transmission unit comprises a header field, and the header field indicates a modulation manner used by a second data transmission unit after the first data transmission unit;
the transceiver module is further configured to receive the second data transmission unit; and
the processing module is configured to demodulate the second data transmission unit based on the modulation manner of the header field of the first data transmission unit.

25. The receive end apparatus according to claim 24, wherein the first data transmission unit further comprises a load field, the load field comprises to-be-transmitted data in the first data transmission unit, and the modulation manner of the header field of the first data transmission unit is the same as a modulation manner of the load field of the first data transmission unit.

26. The receive end apparatus according to claim 25, wherein the first data transmission unit is a newly transmitted data transmission unit, the second data transmission unit is a retransmitted data transmission unit, the first data transmission unit is generated by a transmit end apparatus by using a first modulation manner, the modulation manner indicated by the header field of the first data transmission unit is a second modulation manner, and a modulation order of the first modulation manner is higher than a modulation order of the second modulation manner; and
the transceiver module is further configured to send a first retransmission request.

27. The receive end apparatus according to claim 26, wherein that the transceiver module is configured to receive a first data transmission unit comprises: receiving the first data transmission unit in a first time interval, wherein the first time interval is a time interval in which the receive end apparatus expects to receive the retransmitted data transmission unit after sending the first retransmission request to the transmit end apparatus;

the processing module is further configured to check a modulation indication field of the header field of the first data transmission unit, wherein the modulation indication field of the header field of the first data transmission unit indicates the modulation manner used by the second data transmission unit after the first data transmission unit; and

the processing module is further configured to determine, when the check of the receive end apparatus on the modulation indication field of the header field of the first data transmission unit succeeds, to demodulate the second data transmission unit based on the modulation manner indicated by the modulation indication field of the header field of the first data transmission unit.

28. The receive end apparatus according to claim 27, wherein the processing module is further configured to demodulate, when the check of the receive end apparatus on the modulation indication field of the header field of the first data transmission unit fails, the second data transmission unit by using the first modulation manner.

29. The receive end apparatus according to claim 27 or 28, wherein a header field of the second data transmission unit indicates a modulation manner used by a third data transmission unit after the second data transmission unit;

the transceiver module is further configured to receive the third data transmission unit; and
the processing module is further configured to demodulate the third data transmission unit based on the first modulation manner.

30. The receive end apparatus according to any one of claims 27 to 29, wherein

the transceiver module is further configured to receive a fourth data transmission unit in the first time interval, wherein the fourth data transmission unit is a data transmission unit that is received by the receive end apparatus in the first time interval other than the first data transmission unit and the second data transmission unit, and a modulation indication field of a header field of the fourth data transmission unit indicates a modulation manner used by a fifth data transmission unit after the fourth data transmission unit;
the processing module is further configured to check the modulation indication field of the header field of the fourth data transmission unit; and
the processing module is further configured to demodulate, when the check of the receive end apparatus on the modulation indication field of the header field of the fourth data transmission unit succeeds, the fifth data transmission unit by using the modulation manner indicated by the modulation indication field of the header field of the fourth data transmission unit; or
the processing module is further configured to demodulate, when the check of the receive end apparatus on the modulation indication field of the header field of the fourth data transmission unit fails, the fifth data transmission unit by using the first modulation manner.

31. The receive end apparatus according to any one of claims 27 to 30, wherein a bit rate of the first modulation manner is an integer multiple of a bit rate of the second modulation manner.

32. The receive end apparatus according to claim 31, wherein the second data transmission unit is an $n^{th}$ data transmission unit after the first data transmission unit, and n is a positive integer, wherein a $1^{st}$ data transmission unit to an $(n-1)^{th}$ data transmission unit after the first data transmission unit are all generated by the transmit end apparatus by using the first modulation manner, and modulation manners indicated by header fields of the $1^{st}$ data transmission unit to the $(n-1)^{th}$ data transmission unit are the first modulation manner; and the second data transmission unit is generated by the transmit end apparatus by using the second modulation manner, and a modulation manner indicated by a header field of the second data transmission unit is the first modulation manner.

33. The receive end apparatus according to any one of claims 27 to 32, wherein

the transceiver module is further configured to receive a sixth data transmission unit, wherein the sixth data transmission unit is a data transmission unit received by the receive end apparatus outside the first time interval, and a header field comprised in the sixth data transmission unit indicates a modulation manner used by a seventh data transmission unit after the sixth data transmission unit; and
the processing module is further configured to demodulate the seventh data transmission unit by using the first modulation manner.

34. The receive end apparatus according to any one of claims 24 to 33, wherein the first data transmission unit is the newly transmitted data transmission unit, and the header field of the first data transmission unit comprises a modulation indication field, wherein the modulation indication field is transmitted by using a first level or a second level, and the first level and the second level are two levels with highest absolute values in a plurality of levels corresponding to the first modulation manner.

35. A communication apparatus, wherein the communication apparatus comprises a processor and a memory, wherein
the memory is configured to store computer-executable instructions, and when the processor executes the computer-executable instructions, the communication apparatus is enabled to perform the method according to any one of claims 1 to 6 or 7 to 17.

36. A communication apparatus, wherein the communication apparatus comprises a processor and an interface circuit, wherein

the interface circuit is configured to receive computer-executable instructions, and transmit the computer-executable instructions to the processor; and
the processor is configured to execute the computer-executable instructions, to enable the communication apparatus to perform the method according to any one of claims 1 to 6 or 7 to 17.

37. A computer-readable storage medium, wherein the computer-readable storage medium stores a computer program, and when the computer program is executed by a computer, the computer is enabled to perform the method according to any one of claims 1 to 6 or 7 to 17.

FIG. 1

| Header field | Load field |
|---|---|

Data transmission unit

FIG. 2

FIG. 3

40

401

Transmit end
apparatus

402

Receive end
apparatus

**FIG. 4**

50

501

Processor

CPU 0

CPU 1

507

Processor

CPU 0

CPU 1

503

Memory

Communication line
502

504

Communication
interface

505

Output device

506

Input device

**FIG. 5**

```
┌──────────────┐                                        ┌──────────────┐
│ Transmit end │                                        │ Receive end  │
│  apparatus   │                                        │  apparatus   │
└──────┬───────┘                                        └──────┬───────┘
       │         ┌─────────────────────────────────────┐      │
       ├─────────┤ S601: First data transmission unit   ├─────►│
       │         └─────────────────────────────────────┘      │
┌──────┴────────────────────────────┐                         │
│ S602: Generate a second data       │                         │
│ transmission unit based on a       │                         │
│ modulation manner indicated by a   │                         │
│ header field of the first data     │                         │
│ transmission unit                  │                         │
└──────┬─────────────────────────────┘                        │
       │         ┌─────────────────────────────────────┐      │
       ├─────────┤ S603: Second data transmission unit  ├──────┤
       │         └─────────────────────────────────────┘      │
       │                          ┌──────────────────────────┴──────────┐
       │                          │ S604: Demodulate the second data     │
       │                          │ transmission unit based on the       │
       │                          │ modulation manner indicated by the   │
       │                          │ header field of the first data       │
       │                          │ transmission unit                    │
       │                          └──────────────────────────┬──────────┘
      ─┴─                                                    ─┴─
```

FIG. 6

```
┌────────────────────┬────────┬──────────────────────────────────┐
│    Modulation      │  ...   │                                  │
│ indication field   │        │                                  │
└────────────────────┴────────┴──────────────────────────────────┘
_____/ _____/
         Header field                     Load field
```

FIG. 7

```
       PAM2          PAM4          PAM2          PAM4
     ╭────╮       ╭─────────╮    ╭──────╮     ╭─────────╮
┌────┴──┐ ▼  ┌────┴────┐ ▼  ┌────┴──┐ ▼  ┌────┴────┐ ▼  ┌───────┐
│ PAM4  │    │  PAM2   │    │ PAM4  │    │  PAM2   │    │ PAM4  │
└───────┘    └─────────┘    └───────┘    └─────────┘    └───────┘
    ▲             ▲             ▲             ▲             ▲
    │             │             │             │             │
  Data          Data          Data          Data          Data
transmission  transmission  transmission  transmission  transmission
  unit 1        unit 2        unit 3        unit 4        unit 5
```

FIG. 8

FIG. 9

Data transmission unit 1 Data transmission unit 2 Data transmission unit 3 Data transmission unit 4 Data transmission unit 5

| PAM4 | PAM2 | PAM4 | PAM2 | PAM4 |

The check fails: PAM4     The check fails: PAM4     The check fails: PAM4     The check succeeds: PAM2

FIG. 10

Data transmission unit 1 → PAM4
Data transmission unit 2 → PAM4
Data transmission unit 3 → PAM2
Data transmission unit 4 → PAM4
Data transmission unit 5 → PAM4
Data transmission unit 6 → PAM2
Data transmission unit 7 → PAM4
Data transmission unit 8 → PAM4

The check fails: PAM4
The check succeeds: PAM4
The check fails: PAM4
The check fails: PAM4
The check succeeds: PAM2
The check succeeds: PAM4

FIG. 11

```
┌──────────────┐                                    ┌──────────────┐
│ Transmit end │                                    │  Receive end │
│   apparatus  │                                    │   apparatus  │
└──────┬───────┘                                    └──────┬───────┘
       │                ┌──────────────────────────────────┐   │
       │◄───────────────┤ S1201: First retransmission request │
       │                └──────────────────────────────────┘   │
┌──────┴───────────────────────┐                           │
│ S1202: Determine retransmitted data │                    │
└──────┬───────────────────────┘                           │
┌──────┴───────────────────────┐                           │
│ S1203: Generate a first data  │                          │
│    transmission unit          │                          │
└──────┬───────────────────────┘                           │
       │     ┌────────────────────────────────────┐        │
       ├─────┤ S1204: First data transmission unit ├───────►│
       │     └────────────────────────────────────┘        │
       │                         ┌─────────────────────────┴──────────────────┐
       │                         │ S1205: Demodulate the first data transmission unit │
       │                         └─────────────────────────┬──────────────────┘
       │                         ┌─────────────────────────┴──────────────┐
       │                         │ S1206: Determine a modulation manner of a │
       │                         │    second data transmission unit        │
       │                         └─────────────────────────┬──────────────┘
```

S1207: Generate a $1^{st}$ data transmission unit to an $n^{th}$ data transmission unit after the first data transmission unit

S1208: $1^{st}$ data transmission unit to $n^{th}$ data transmission unit after the first data transmission unit

S1209: Demodulate the $1^{st}$ data transmission unit to the $n^{th}$ data transmission unit after the first data transmission unit

FIG. 12

Communication apparatus 130

Transceiver module 1301

Processing module 1302

FIG. 13

## INTERNATIONAL SEARCH REPORT

International application No.

**PCT/CN2021/099014**

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; CNKI; ENTXT; 3GPP: 脉冲调制, 幅度调制, 振幅调制, 脉冲编码调制, 幅度编码调制, 阶数, 高阶, 低阶, 帧, 报头, 报头, 头部, 指示, 调制方式, 调制模式, 前一个, 后一个, 后续, 随后, 重传, 新传, 前向纠错, 前向差错, pulse amplitude modulation, modulat+ method, modulate mode, modulate level, high level, lower level, head, header, frame, packet, preamble, indicate, former, previous, second, next, forward error correction, retransmission, first transmission, MCS, HARQ, ACK, ARQ, PAM4, PAM 2, FEC

### C. DOCUMENTS CONSIDERED TO BE RELEVANT

| Category* | Citation of document, with indication, where appropriate, of the relevant passages | Relevant to claim No. |
|---|---|---|
| X | CN 101662438 A (HUAWEI TECHNOLOGIES CO., LTD.) 03 March 2010 (2010-03-03) description, page 5, line 16 - page 14, line 25 | 1,2,7,8,18,19, 24,25, 35-37 |
| X | CN 106656415 A (NO.54 RESEARCH INSTITUTE OF CHINA ELECTRONICS TECHNOLOGY GROUP CORP.) 10 May 2017 (2017-05-10) description, paragraphs 18-29 | 1,2,7,8,18,19, 24,25, 35-37 |
| A | CN 1277766 A (ERICSSON TELEFON AB. L. M.) 20 December 2000 (2000-12-20) entire document | 1-37 |
| A | JP 2020010110 A (SHARP K. K.) 16 January 2020 (2020-01-16) entire document | 1-37 |
| A | WO 2010056357 A2 (THOMSON LICENSING et al.) 20 May 2010 (2010-05-20) entire document | 1-37 |
| A | US 2020396021 A1 (VIAVI SOLUTIONS INC.) 17 December 2020 (2020-12-17) entire document | 1-37 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 February 2022** | **24 February 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/099014**

**C.    DOCUMENTS CONSIDERED TO BE RELEVANT**

| Category* | Citation of document, with indication, where appropriate, of the relevant passages | Relevant to claim No. |
|---|---|---|
| A | CN 104348576 A (POTEVIO INFORMATION TECHNOLOGY CO., LTD.) 11 February 2015 (2015-02-11)<br>entire document | 1-37 |
| A | CN 101547076 A (ZTE CORP.) 30 September 2009 (2009-09-30)<br>entire document | 1-37 |
| A | CN 112534756 A (HUAWEI TECHNOLOGIES CO., LTD.) 19 March 2021 (2021-03-19)<br>entire document | 1-37 |

Form PCT/ISA/210 (second sheet) (January 2015)

**INTERNATIONAL SEARCH REPORT**
Information on patent family members

International application No.

**PCT/CN2021/099014**

| Patent document cited in search report | | | Publication date (day/month/year) | Patent family member(s) | | | Publication date (day/month/year) |
|---|---|---|---|---|---|---|---|
| CN | 101662438 | A | 03 March 2010 | None | | | |
| CN | 106656415 | A | 10 May 2017 | None | | | |
| CN | 1277766 | A | 20 December 2000 | US | 6208663 | B1 | 27 March 2001 |
| | | | | WO | 9912303 | A1 | 11 March 1999 |
| | | | | MY | 119573 | A | 30 June 2005 |
| | | | | CA | 2301945 | A1 | 11 March 1999 |
| | | | | CA | 2301945 | C | 23 December 2008 |
| | | | | TW | 390076 | B | 11 May 2000 |
| | | | | BR | 9811429 | A | 22 August 2000 |
| | | | | AU | 9012198 | A | 22 March 1999 |
| | | | | AU | 751651 | B2 | 22 August 2002 |
| | | | | EP | 2288067 | A2 | 23 February 2011 |
| | | | | EP | 2288067 | A3 | 16 January 2013 |
| | | | | CN | 1135772 | C | 21 January 2004 |
| | | | | KR | 20010023491 | A | 26 March 2001 |
| | | | | KR | 100528419 | B1 | 15 November 2005 |
| | | | | EP | 1010287 | A1 | 21 June 2000 |
| | | | | EP | 1010287 | B1 | 14 March 2012 |
| | | | | EP | 1010287 | B8 | 23 May 2012 |
| | | | | ES | 2383665 | T3 | 25 June 2012 |
| | | | | IN | 2490DEL1998 | A | 10 October 2008 |
| | | | | IN | 241747 | A1 | 30 July 2010 |
| JP | 2020010110 | A | 16 January 2020 | None | | | |
| WO | 2010056357 | A2 | 20 May 2010 | WO | 2010056357 | A3 | 29 July 2010 |
| US | 2020396021 | A1 | 17 December 2020 | EP | 3751778 | A1 | 16 December 2020 |
| | | | | US | 10938513 | B2 | 02 March 2021 |
| CN | 104348576 | A | 11 February 2015 | None | | | |
| CN | 101547076 | A | 30 September 2009 | None | | | |
| CN | 112534756 | A | 19 March 2021 | None | | | |

Form PCT/ISA/210 (patent family annex) (January 2015)